# EUROPEAN PATENT APPLICATION

(11) **EP 4 317 915 A1**
(43) Date of publication of application: **07.02.2024**
(21) Application number: 22774055.2
(22) Date of filing: 10.03.2022
(51) Int. Cl.: G01C 21/32, G01C 21/34

(54) **NAVIGATION METHOD, APPARATUS, MAP AND SYSTEM**

(30) Priority: 23.03.2021 CN 202110309391
(71) Applicant: Huawei Technologies Co., Ltd., Shenzhen, Guangdong 518129 (CN)
(72) Inventor: QIAO, Dezhi, Shenzhen, Guangdong 518129 (CN)
(74) Representative: Maiwald GmbH
(86) International application number: PCT/CN2022/080134
(87) International publication number: WO 2022/199393

(57) **Abstract**

A navigation method, apparatus (1201, 1301, 1401), and system, and a map are provided. The method includes: A first device obtains environment information, determines, based on the environment information, a second passing mode used for a target passing area, and sends a second passing mode notification message to a second device, so that the first device makes, based on the second passing mode notification message, the second passing mode used for the target passing area in a map effective, and makes a first passing mode used for the target passing area in the map ineffective. The second passing mode applicable to a current environment and the first passing mode currently effective in the map are jointly used to guide passing of the second device, so that the second device can complete passing in real time in a passing mode that meets the current environment, and a vehicle owner does not need to participate in decision-making. This is effectively compatible with various map navigation scenarios including an autonomous driving scenario, and helps improve a planned passing capability of the second device.

## Description

### CROSS-REFERENCE TO RELATED APPLICATIONS

This application claims priority to Chinese Patent Application No. 202110309391.5, filed with the China National Intellectual Property Administration on March 23, 2021 and entitled "NAVIGATION METHOD, APPARATUS, AND SYSTEM, AND MAP", which is incorporated herein by reference in its entirety.

### TECHNICAL FIELD

This application relates to the field of internet of vehicles technologies, and in particular, to a navigation method, apparatus, and system, and a map.

### BACKGROUND

In the field of internet of vehicles technologies, when a vehicle has a map navigation function, the vehicle may plan an optimal route from a start location to a destination location by using a locally stored map, and drive to a destination with reference to the optimal route. The map stored in the vehicle is established based on a real world, and includes a mapping of each road, each lane, or even each lane line in the real world, for example, a road speed limit, a lane steering, and a lane line type.

To cope with real-world environment changes, the map in the vehicle is usually updated in a specific periodicity at this stage. During each update periodicity, real-world related data is re-collected at this stage and the map is reconstructed by using the newly collected data. However, in this update manner, it takes at least a month or even a quarter for the entire map to be updated, and it takes at least about a day for even only partial areas of the map to be updated. It is clear that, this update manner is not timely, and the vehicle cannot plan, based on the map that is not updated in time, a passing mode that meets a current environment. This is not conducive to improving a planned passing capability of the vehicle.

In conclusion, a navigation method is currently needed to resolve a technical problem that a planned passing capability of a vehicle is weak because a map cannot be updated in time in the conventional technology.

### SUMMARY

This application provides a navigation method, apparatus, and system, and a map, to resolve a technical problem that a planned passing capability of a vehicle is weak because a map cannot be updated in time in the conventional technology.

According to a first aspect, this application provides a navigation method. The method is applicable to a first device, and the first device may be any device having a processing function, for example, a server or a road side unit. The method includes: The first device obtains environment information, determines, based on the environment information, a second passing mode used for a target passing area, and sends a second passing mode notification message to a second device. The second passing mode is different from a first passing mode that is currently effective in a map and used for the target passing area. In this design, the second device may be any device having a map navigation function, for example, a vehicle, a mobile phone, or another terminal. In this design, the second passing mode applicable to a current environment and the first passing mode currently effective in the map are jointly used to guide passing of the second device, so that the second device on a road section with an environment change can complete passing in real time in a passing mode that meets the current environment, and a vehicle owner does not need to participate in decision-making. This is effectively compatible with various map navigation scenarios including an autonomous driving scenario, and helps improve a planned passing capability of the second device. In addition, this design can further guide a same passing mode for second devices on a same road section, and helps implement unified scheduling and control on the second devices on the same road section.

In a possible design, the first device may determine the second passing mode and send the second passing mode notification message in the following manner: The first device determines whether the environment information meets an effectiveness condition of the second passing mode, and if the environment information meets the effectiveness condition of the second passing mode, sends first indication information to the second device. The first indication information indicates to make the first passing mode ineffective and make the second passing mode effective. In this design, the first device can indicate, in a manner of sending indication information, the second device to automatically switch to the second passing mode, and does not need to directly transmit the full second passing mode. This helps reduce communication overheads.

In a possible design, the first passing mode and the second passing mode may be information at a first layer of the map. In this design, an effective first passing mode and an ineffective second passing mode are preset at the first layer, so that a passing mode currently effective at the first layer can be automatically switched when an environment changes. In this way, the first layer is updated in real time to a new first layer that meets the current environment, so that the second device directly determines a next passing mode based on a latest first layer.

In another possible design, the first device may determine the second passing mode and send the second passing mode notification message in the following manner: The first device first generates the second passing mode based on the environment information, and then sends the second passing mode to the second device. This design is applicable to a scenario in which a first layer of a map in a vehicle does not include the second passing mode.

In a possible design, the first passing mode may be information at a first layer of the map, and the second passing mode may be information at a second layer of the map. In this case, that the first device sends the second passing mode notification message to the second device includes: The first device sends, to the second device, the second layer including the second passing mode. In this design, the second passing mode is sent by using the second layer, so that the second device can determine the currently effective passing mode based on one of the second layer and the first layer.

In a possible design, after sending the second passing mode notification message to the second device, the first device may further send ineffectiveness indication information to the second device when determining that a first ineffectiveness condition is met. The ineffectiveness indication information indicates the second device to stop passing in the target passing area in the second passing mode, or indicates the second device to pass in the target passing area in the first passing mode, or indicates the second device to pass in the target passing area in a default passing mode. In this design, the first device can determine an ineffective moment of the second passing mode, and the second device can be triggered, by using indication information, to make the second passing mode ineffective. This helps stop use of the second passing mode in time, and further helps switch, in time, to the default passing mode or the first passing mode that meets the current environment.

In a possible design, the first ineffectiveness condition may include the following content: No new environment information is received within first preset duration. The content means that an abnormal environment ends, and a passing mode corresponding to a normal environment can be restored in time by indicating to stop the second passing mode. Newly received environment information no longer meets the effectiveness condition of the second passing mode. The content means that an environment that causes the second passing mode changes, and a passing mode corresponding to the current environment can be switched in time by indicating to stop the second passing mode. A passing mode determined based on newly received environment information is different from the second passing mode. The content means that the second passing mode is no longer applicable to the current environment, and a passing mode corresponding to the current environment can be switched in time by indicating to stop the second passing mode. Effectiveness duration of the second passing mode exceeds preset effective duration. The content means that the second passing mode is ineffective, and continuous use of the ineffective second passing mode can be avoided by indicating to stop the second passing mode.

In a possible design, the first device may further send effective duration indication information of the second passing mode to the second device. The effective duration indication information indicates the second device to stop passing in the target passing area in the second passing mode after preset effective duration expires. In this design, the second device is indicated to automatically monitor an ineffective moment of the second passing mode, and the first device may no longer perform centralized monitoring. This helps reduce working pressure of the first device.

In a possible design, the environment information may include visibility information of at least one location. In this case, that the first device determines, based on the environment information, the second passing mode used for the target passing area includes: The first device determines, based on the visibility information, a target speed limit road section in the target passing area and a target speed limit of the target speed limit road section. In this design, when visibility on a road changes, a target speed limit meeting current visibility is indicated to the second device. This helps reduce a vehicle speed of the second device in time in a case of poor visibility, thereby improving passing safety.

In a possible design, the first device may store a preset correspondence between a visibility range and a speed limit. In this case, that the first device determines, based on the visibility information, a target speed limit road section in the target passing area and a target speed limit of the target speed limit road section includes: The first device first determines, based on the visibility information, target visibility corresponding to the target speed limit road section in the target passing area, then queries the preset correspondence between a visibility range and a speed limit, and determines that a speed limit corresponding to a visibility range in which the target visibility is located is the target speed limit corresponding to the target speed limit road section. In this design, the first device can automatically generate the target speed limit meeting the current visibility on the target speed limit road section.

In a possible design, the first layer may store an effective first speed limit, an ineffective second speed limit, and a visibility range that triggers the second speed limit to take effect. In this case, that the first device determines, based on the visibility information, a target speed limit road section in the target passing area and a target speed limit of the target speed limit road section includes: The first device first determines, based on the visibility information, target visibility corresponding to the target speed limit road section in the target passing area, then determines whether the target visibility is within the visibility range that triggers the second speed limit to take effect, and if the target visibility is within the visibility range that triggers the second speed limit to take effect, determines the second speed limit as the target speed limit corresponding to the target speed limit road section. In this design, a trigger condition corresponding to the second speed limit is preset at the first layer, so that the second speed limit can automatically take effect when visibility on the target speed limit road section meets the trigger condition corresponding to the second speed limit, so that a speed limit at the first layer keeps consistent with environment visibility.

In a possible design, the environment information includes a displayed speed limit of at least one sign. In this case, that the first device determines, based on the environment information, the second passing mode used for the target passing area includes: The first device determines, based on the displayed speed limit, a target sign whose speed limit of an effect area changes and whose at least a part of road sections of the effect area is located in the target passing area; and determines to pass through the at least part of road sections in the target passing area at a speed not exceeding a changed speed limit of the target sign. In this design, when a displayed speed limit of a variable speed limit sign changes, a changed displayed speed limit is indicated to the second device, so that the second device can switch, in time, to a vehicle speed that meets the changed displayed speed limit, to reduce a violation possibility of the second device as much as possible.

In a possible design, the environment information includes location information of a road section on which a traffic incident occurs. In this case, that the first device determines, based on the environment information, the second passing mode used for the target passing area includes: The first device determines an impassable area in the target passing area based on the road section location information; and determines that the second passing mode includes prohibiting passing in the impassable area. In this design, when a traffic incident occurs on a road, the impassable area is indicated to the second device, to help remind the second device to bypass the impassable area.

In a possible design, after determining the impassable area in the target passing area based on the road section location information, the first device may further determine a route for traveling in the target passing area in a manner of bypassing the impassable area, to indicate the second device to accurately bypass the impassable area according to the route.

In a possible design, after determining the impassable area in the target passing area based on the road section location information, the first device may further determine all lane lines affected by the impassable area, and associate all the lane lines with the first layer of the map, to determine a solid lane line in all the lane lines, and determine that the second passing mode further includes crossing the solid lane line. In this design, when lane lines on both sides of the impassable area are prohibited from being crossed, the second device is indicated to cross the lane line, so that the second device urgently bypasses the impassable area, and does not adhere to a no-crossing indication in a real traffic environment, to reduce a possibility of a traffic accident.

According to a second aspect, this application provides a navigation method. The method is applicable to a second device, and the second device may be any device having a map navigation function, for example, a vehicle. The method includes: The second device receives a second passing mode notification message from a first device; and makes, based on the second passing mode notification message, a second passing mode used for a target passing area in a map effective, and makes a first passing mode used for the target passing area in the map ineffective. In this design, at least two passing modes are set in the map, and a passing mode that meets a current environment takes effect in time, so that the second device passes in the passing mode that meets the current environment, and a planned passing capability of the second device is improved.

In a possible design, the first passing mode is still stored in the map after being ineffective. In this design, making a passing mode ineffective is not overwriting or deleting the passing mode, instead, the passing mode exists but is not used. In this way, at least two passing modes always coexist in the map in this application, to facilitate real-time switching of the passing modes. In addition, according to this design, even if a currently effective passing mode is not applicable subsequently, the second device may directly make an original passing mode effective again, and the first device does not need to deliver a passing mode again. This helps reduce a communication loss.

In a possible design, the second passing mode notification message may include first indication information, and the first indication information indicates to make the first passing mode ineffective and make the second passing mode effective. In this design, the second device can be automatically triggered by indication information to perform an effective operation and an ineffective operation.

In a possible design, the first passing mode and the second passing mode may be information at a first layer of the map. In this case, the second device may obtain an updated first layer based on the second passing mode notification message by making the first passing mode at the first layer ineffective and making the second passing mode at the first layer effective. In this design, an effective passing mode at the updated first layer can always meet the current environment.

In a possible design, the second passing mode notification message may include content of the second passing mode. This design is applicable to a scenario in which the second device does not include the content of the second passing mode.

In a possible design, the first passing mode may be information at a first layer of the map, the second passing mode may be information at a second layer of the map, and the second passing mode notification message includes the second layer. In this design, both the first layer and the second layer are set in the map, so that the second device can preferably use content at the second layer in a passing process for passing, and the second device can be jointly guided by using the second layer and the first layer to pass in the mode that meets the current environment.

In a possible design, after making the second passing mode used for the target passing area in the map effective and making the first passing mode used for the target passing area in the map ineffective, and when determining that a second ineffectiveness condition is met, the second device may further stop passing in the target passing area in the second passing mode; or pass in the target passing area in the first passing mode; or pass in the target passing area in a default passing mode, so as to switch the passing mode in time when the second passing mode is ineffective.

In a possible design, the second ineffectiveness condition may include any one of the following content: The second device receives ineffectiveness indication information sent by the first device. The ineffectiveness indication information indicates the second device to stop passing in the target passing area in the second passing mode, and the content can be used to end using the second passing mode in a manner indicated by the first device. The second device leaves the target passing area. The content can be used to end a passing mode in real time in a manner of monitoring a current location by the second device, so that a new passing mode can be switched in time. The second device does not obtain a new second passing mode notification message within second preset duration. The content can be used to enable, by presetting a rule in the first device and the second device, the second device to learn in time when the second passing mode ends. This helps restore the default passing mode or the first passing mode in time. Time in which the second device passes in the second passing mode exceeds preset effective duration.

In a possible design, the first passing mode may include passing in the target passing area at a vehicle speed not exceeding a first speed limit, and the second passing mode includes passing in the target passing area at a vehicle speed not exceeding a second speed limit. This design helps the second device switch a vehicle speed of the second device in time according to the second passing mode.

In a possible design, the second speed limit may be a lowest speed limit in a visibility speed limit determined based on visibility information and a sign speed limit determined based on a displayed speed limit of a sign. In this way, the second device may pass at a speed not exceeding the lowest speed limit in the visibility speed limit and the sign speed limit, so that the vehicle speed of the second device is applicable to a most harsh traffic environment, to improve driving safety.

In a possible design, the second passing mode may include an impassable area in the target passing area and a route for bypassing the impassable area. This design enables the second device to flexibly bypass the impassable area, and helps reduce a probability of a traffic accident, or can prevent the second device from waiting for long time, thereby effectively improving driving experience.

In a possible design, the route for bypassing the impassable area may include a target lane line indicated as allowing to be crossed, and the target lane line is indicated as no-crossing at the first layer. This design enables the second device to perform a lane change in a case of an emergency traffic incident, without being stuck in a real road environment, thereby effectively improving driving safety.

According to a third aspect, this application provides a map, including a first passing mode and a second passing mode that are used for a target passing area. When the second passing mode is effective, the first passing mode is ineffective. When the first passing mode is effective, the second passing mode is ineffective. In this design, two passing modes are set in the map, so that a passing mode currently effective in the map can be switched in real time by making the passing mode effective or ineffective. This makes the map more suitable for a current environment, and improves timeliness of the map and accuracy of planning and navigation.

In a possible design, the first passing mode may be a default passing mode used for passing in the target passing area, so that the map automatically guides passing by default in the default passing mode.

In a possible design, both the first passing mode and the second passing mode may exist at a first layer of the map. In this way, a user of the map can flexibly switch the passing mode by referring only to the first layer, without referring to other additional information.

In a possible design, the first passing mode may exist at a first layer of the map, and the second passing mode may exist at a second layer of the map. In this way, the user of the map may determine the passing mode based on the first layer and the second layer.

According to a fourth aspect, this application provides a navigation apparatus. The apparatus may be any device having a processing function, for example, an internet of vehicles server or a road side unit. The apparatus includes: an obtaining unit, configured to obtain environment information; a determining unit, configured to determine, based on the environment information, a second passing mode used for a target passing area, where the second passing mode is different from a first passing mode that is currently effective in a map and used for the target passing area; and a transceiver unit, configured to send a second passing mode notification message to a second device.

In a possible design, the determining unit is specifically configured to determine that the environment information meets an effectiveness condition of the second passing mode. The transceiver unit is specifically configured to send first indication information to the second device. The first indication information indicates to make the first passing mode ineffective and make the second passing mode effective.

In a possible design, the first passing mode and the second passing mode may be information at a first layer of the map.

In a possible design, the determining unit is specifically configured to generate the second passing mode based on the environment information; and the transceiver unit is specifically configured to send the second passing mode to the second device.

In a possible design, the first passing mode may be information at a first layer of the map, and the second passing mode may be information at a second layer of the map. In this case, the transceiver unit is specifically configured to send, to the second device, the second layer including the second passing mode.

In a possible design, after sending the second passing mode notification message to the second device, the transceiver unit may further send ineffectiveness indication information to the second device when determining that a first ineffectiveness condition is met. The ineffectiveness indication information indicates the second device to stop passing in the target passing area in the second passing mode, or indicates the second device to pass in the target passing area in the first passing mode, or indicates the second device to pass in the target passing area in a default passing mode.

In a possible design, the first ineffectiveness condition may include the following content: No new environment information is received within first preset duration; newly received environment information no longer meets the effectiveness condition of the second passing mode; a passing mode determined based on newly received environment information is different from the second passing mode; or effectiveness duration of the second passing mode exceeds preset effective duration.

In a possible design, the transceiver unit may further send effective duration indication information of the second passing mode to the second device. The effective duration indication information indicates the second device to stop passing in the target passing area in the second passing mode after preset effective duration expires.

In a possible design, the environment information may include visibility information of at least one location. The determining unit is specifically configured to: determine, based on the visibility information, a target speed limit road section in the target passing area and a target speed limit of the target speed limit road section.

In a possible design, the apparatus may store a preset correspondence between a visibility range and a speed limit. The determining unit is specifically configured to: first determine, based on the visibility information, target visibility corresponding to the target speed limit road section in the target passing area, then query the preset correspondence between a visibility range and a speed limit, and determine that a speed limit corresponding to a visibility range in which the target visibility is located is the target speed limit corresponding to the target speed limit road section.

In a possible design, the first layer may store an effective first speed limit, an ineffective second speed limit, and a visibility range that triggers the second speed limit to take effect. The determining unit is specifically configured to: first determine, based on the visibility information, target visibility corresponding to the target speed limit road section in the target passing area, then determine whether the target visibility is within the visibility range that triggers the second speed limit to take effect, and if the target visibility is within the visibility range that triggers the second speed limit to take effect, determine the second speed limit as the target speed limit corresponding to the target speed limit road section.

In a possible design, the environment information includes a displayed speed limit of at least one sign. The determining unit is specifically configured to: determine, based on the displayed speed limit, that a speed limit of an effect area of the sign changes and at least a part of road sections of the effect area is located in the target passing area; and determine to pass through the at least part of road sections in the target passing area at a speed not exceeding a changed speed limit.

In a possible design, the environment information includes location information of a road section on which a traffic incident occurs. The determining unit is specifically configured to: determine an impassable area in the target passing area based on the road section location information; and determine that the second passing mode includes prohibiting passing in the impassable area.

In a possible design, after determining the impassable area in the target passing area based on the road section location information, the determining unit may further determine a route for traveling in the target passing area in a manner of bypassing the impassable area, to indicate the second device to accurately bypass the impassable area according to the route.

In a possible design, after determining the impassable area in the target passing area based on the road section location information, the determining unit may further determine all lane lines affected by the impassable area, and associate all the lane lines with the first layer of the map, to determine a solid lane line in all the lane lines, and determine that the second passing mode further includes crossing the solid lane line.

According to a fifth aspect, this application provides a navigation apparatus. The apparatus may be any device having a map navigation function, for example, a vehicle, a mobile phone, or another terminal. The apparatus includes: a transceiver unit, configured to receive a second passing mode notification message from a first device; and a processing unit, configured to make, based on the second passing mode notification message, a second passing mode used for a target passing area in a map effective, and make a first passing mode used for the target passing area in the map ineffective.

In a possible design, the second passing mode notification message may include first indication information, and the first indication information indicates to make the first passing mode ineffective and make the second passing mode effective.

In a possible design, the first passing mode and the second passing mode may be information at a first layer of the map.

In a possible design, the second passing mode notification message may include content of the second passing mode.

In a possible design, the first passing mode may be information at a first layer of the map, the second passing mode may be information at a second layer of the map, and the second passing mode notification message includes the second layer.

In a possible design, after making the second passing mode used for the target passing area in the map effective and making the first passing mode used for the target passing area in the map ineffective, and when determining that a second ineffectiveness condition is met, the processing unit may further stop passing in the target passing area in the second passing mode; or pass in the target passing area in the first passing mode; or pass in the target passing area in a default passing mode.

In a possible design, the second ineffectiveness condition may include the following content: Ineffectiveness indication information sent by the first device is received, where the ineffectiveness indication information indicates to stop passing in the target passing area in the second passing mode; leaving the target passing area; a new second passing mode notification message is not obtained within second preset duration; or time for passing in the second passing mode exceeds preset effective duration.

In a possible design, the first passing mode may include passing in the target passing area at a vehicle speed not exceeding a first speed limit, and the second passing mode may include passing in the target passing area at a vehicle speed not exceeding a second speed limit.

In a possible design, the second speed limit may be a lowest speed limit in a visibility speed limit determined based on visibility information and a sign speed limit determined based on a displayed speed limit of a sign.

In a possible design, the second passing mode may include an impassable area in the target passing area and a route for bypassing the impassable area.

In a possible design, the route for bypassing the impassable area may include a target lane line indicated as crossable, and the target lane line is indicated as uncrossable at the first layer.

According to a sixth aspect, this application provides a navigation apparatus, including a processor and a communication interface. The communication interface is configured to: receive a signal from another communication apparatus other than the navigation apparatus and transmit the signal to the processor, or send a signal from the processor to another communication apparatus other than the navigation apparatus. The processor is configured to implement, by using a logic circuit or executing code instructions, the method according to any design in the first aspect or the method according to any design in the second aspect.

According to a seventh aspect, this application provides a navigation apparatus, including a processor. The processor is connected to a memory, the memory is configured to store a computer program, and the processor is configured to execute the computer program stored in the memory, so that the apparatus performs the method according to any design in the first aspect, or performs the method according to any design in the second aspect.

According to an eighth aspect, this application provides a navigation system, including a first device and a second device. The first device may be any device having a processing function, for example, an internet of vehicles server or a road side unit, and is configured to implement the method according to any design in the first aspect. The second device may be any device having a map navigation function, for example, a vehicle, a mobile phone, or another terminal, and is configured to implement the method according to any design in the second aspect.

According to a ninth aspect, this application provides a chip. The chip may include a processor and an interface. The processor is configured to read instructions through the interface, to perform the method according to any design in the first aspect or perform the method according to any design in the second aspect.

According to tenth aspect, this application provides a computer-readable storage medium. The computer-readable storage medium stores a computer program. When the computer program is run, the method according to any design in the first aspect is implemented, or the method according to any design in the second aspect is implemented.

According to an eleventh aspect, this application provides a navigation apparatus. The navigation apparatus includes a processor and a memory, the memory stores computer program instructions, and the processor runs the computer program instructions to implement the method according to any design in the first aspect, or implement the method according to any design in the second aspect.

According to a twelfth aspect, this application provides a computer program product. When the computer program product runs on a processor, the method according to any design in the first aspect is implemented, or the method according to any design in the second aspect is implemented.

For details of beneficial effects of the second aspect to the twelfth aspect, refer to technical effects that can be achieved by corresponding designs in the first aspect. Details are not described herein again.

### BRIEF DESCRIPTION OF DRAWINGS

FIG. 1 is a schematic diagram of a possible system architecture applicable to an embodiment of this application;
FIG. 2 is an example of a schematic flowchart corresponding to a map update method commonly used in the industry;
FIG. 3 is an example of a schematic flowchart corresponding to a navigation method according to Embodiment 1 of this application;
FIG. 4 is an example of a schematic flowchart corresponding to a navigation method according to Embodiment 2 of this application;
FIG. 5A and FIG. 5B are an example of a schematic application flowchart in a visibility speed limit scenario according to Embodiment 2 of this application;
FIG. 6 is an example of a schematic application flowchart in a sign speed limit scenario according to Embodiment 2 of this application;
FIG. 7A and FIG. 7B are an example of a schematic application flowchart in a traffic incident scenario according to Embodiment 2 of this application;
FIG. 8 is an example of a schematic flowchart corresponding to a navigation method according to Embodiment 3 of this application;
FIG. 9 is an example of a schematic application flowchart in a visibility speed limit scenario according to Embodiment 3 of this application;
FIG. 10 is an example of a schematic application flowchart in a sign speed limit scenario according to Embodiment 3 of this application;
FIG. 11 is an example of a schematic application flowchart in a traffic incident scenario according to Embodiment 3 of this application;
FIG. 12 is a schematic diagram of a structure of a navigation apparatus according to an embodiment of this application;
FIG. 13 is a schematic diagram of a structure of a navigation apparatus according to an embodiment of this application; and
FIG. 14 is a schematic diagram of a structure of a navigation apparatus according to an embodiment of this application.

### DESCRIPTION OF EMBODIMENTS

It should be noted that navigation solutions in embodiments of this application may be applied to an internet of vehicles, for example, vehicle to everything (vehicle to everything, V2X), long term evolution-vehicle (long term evolution-vehicle, LTE-V), or vehicle to vehicle (vehicle to vehicle, V2V). For example, the navigation solutions may be applied to a vehicle having a map navigation function, or another apparatus having a map navigation function in a vehicle. The another apparatus includes but is not limited to another sensor such as an in-vehicle terminal, an in-vehicle controller, an in-vehicle module, an automobile module, an in-vehicle component, an in-vehicle chip, an in-vehicle unit, an in-vehicle radar, or an in-vehicle camera. The vehicle may implement a navigation method provided in this application by using the in-vehicle terminal, the in-vehicle controller, the in-vehicle module, the automobile module, the in-vehicle component, the in-vehicle chip, the in-vehicle unit, the in-vehicle radar, or the in-vehicle camera. Certainly, the navigation solutions in embodiments of this application may alternatively be applied to another intelligent terminal having a map navigation function other than a vehicle, or disposed in another intelligent terminal having a map navigation function other than a vehicle, or disposed in a component of the intelligent terminal. The intelligent terminal may be an intelligent transportation device, a smart household device, or a robot, for example, includes but is not limited to an intelligent terminal, another sensor like a controller, a chip, a radar or a camera in the intelligent terminal, and another component.

The following describes the technical solutions in embodiments of this application with reference to the accompanying drawings in embodiments of this application. It is clear that the described embodiments are merely a part rather than all of embodiments of this application.

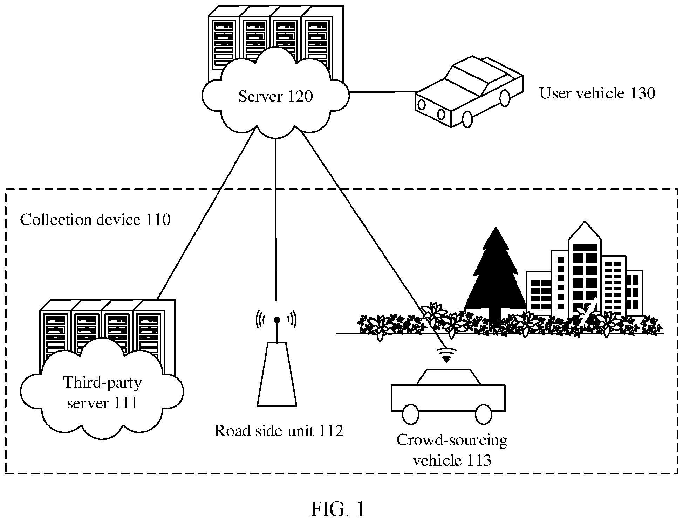

FIG. 1 is a schematic diagram of a possible system architecture applicable to an embodiment of this application. The system architecture shown in FIG. 1 includes a collection device 110, a server 120, and a user vehicle 130. The server 120 may be a single server, or may be a server cluster including a plurality of servers. In the internet of vehicles field, the server 120 may be specifically a cloud server, which is also referred to as a cloud, a cloud server, a cloud controller, an internet of vehicles server, or the like. The cloud server is a general term for devices or components that have a data processing capability. For example, the cloud server may include an entity device like a host or a processor, or may include a virtual device like a virtual machine or a container, or may include a chip or an integrated circuit. The user vehicle 130 may be any vehicle having a map navigation function, including but not limited to a car, a bus, or even a truck. Generally, the user vehicle 130 may further register with the server 120, to obtain various services such as a voice service, a navigation service, an autonomous driving service, a flight query service, or a voice broadcast service that are provided by the server 120. The collection device 110 is a device that can obtain environment information in a real traffic network, for example, may include but is not limited to the following types of devices:

A third-party server 111 refers to a server that is disposed in a third-party organization and independent of the server 120 and the user vehicle 130 and that has a sharing function. In the internet of vehicles field, the third-party organization can usually be set as a manager of a transportation system, for example, the National Transportation Management Department, or urban transportation management offices or management institutes at all levels. The manager of the transportation system has a capability of supervising each traffic line in the transportation system in real time, can learn a passing situation of each traffic line in time, and can make a specific change to a passing mode of the traffic line, for example, change a speed limit of the traffic line.

A road side unit (road side unit, RSU) 112 refers to an apparatus that has a communication function and is installed on one side or both sides of a road. Generally, the road side unit can establish a connection to an on board unit (on board unit, OBU) on a vehicle when the vehicle passes, to implement vehicle identification. In this embodiment of this application, functional modules such as a camera, a radar, or a laser transmitter may be further encapsulated in the road side unit. The road side unit can monitor in real time by using these functional modules, a road in which the road side unit is located, and learn changed environment information in time when a road environment changes.

A crowd-sourcing vehicle 113 refers to a vehicle that is agreed in advance with the server 120 to actively report environment information in a passing process, for example, the user vehicle 130 that joins a passing experience project of the server 120, or a surveying and mapping vehicle that accepts an outsourcing entrustment of the server 120. For each user vehicle 130 successfully registered on the server 120, the server 120 may return, to a vehicle owner, a query interface of whether to allow to join the passing experience project. If the vehicle owner chooses to join the passing experience project, the user vehicle 130 actively reports current environment information to the server 120 during subsequent driving. Certainly, the user vehicle 130 also receives second passing mode indication information generated by the server 120 based on current environment information reported by each crowd-sourcing vehicle 113. In this way, the user vehicle 130 can pass through a current road section in a second passing mode that is more consistent with an environment of the current road section, to improve passing experience of the vehicle owner. In order to enrich sources and types of environment information, the server 120 may also entrust a special surveying and mapping company, and the entrusted surveying and mapping company may dispatch surveying and mapping vehicles according to a fixed collection periodicity, so that the surveying and mapping vehicles travel along each loop in the city, and collect environment information on the loop in real time during driving.

It should be understood that types and a quantity of collection devices, a quantity of servers, and a quantity of user vehicles in the system architecture are not limited in this embodiment of this application. For example, one server may exchange information with only one type of collection device (for example, the third-party server 111) and one user vehicle, or may exchange information with a plurality of collection devices (such as the road side unit 112 and the crowd-sourcing vehicle 113) and one user vehicle, or may exchange information with a plurality of collection devices and a plurality of user vehicles. Information exchange between two devices may mean that the two devices directly interact with each other in a wired manner or a wireless manner, or may mean that the two devices indirectly interact with each other by using one or more other devices. In addition to the collection device, the server, and the user vehicle, the system architecture to which this embodiment of this application is applicable may further include other devices such as a terminal device, a network device, and a core network device. This is not limited in this embodiment of this application. In addition, any device in this embodiment of this application may integrate functions into one independent physical device, or may distribute the functions on a plurality of independent physical devices. This is not limited in this embodiment of this application.

Based on the system architecture shown in FIG. 1, when the user vehicle 130 has a map navigation function, the user vehicle 130 may obtain a map from the server 120 in advance. The map is usually constructed by the server 120 based on a collected real traffic environment picture, is a mapping of a real traffic environment in a real world, and includes a passing mode corresponding to each passing area specified in the real traffic environment, for example, a speed limit value specified for each road, an attribute of whether each lane line can be crossed, and a steering attribute of each lane. When implementing the map navigation function, the user vehicle 130 may first obtain a destination location input by the vehicle owner, then plan an optimal route from a current location (or a start location input by the vehicle owner) to the destination location by using a locally stored map, and travel to the destination location according to the optimal route indicated in the map. Considering that the real traffic environment in the real world changes in real time, to improve accuracy of map navigation, the server 120 may further re-collect a traffic environment picture at intervals (for example, every quarter or every month), and reconstruct a new map by using the re-collected traffic environment picture, to regularly deliver new maps to each user vehicle 130. However, an operation of re-collecting a traffic environment picture usually takes long time. Even if only a traffic environment picture of a partial area on the map is collected, collection can only be implemented at most once a day currently. Such a long-time collection operation greatly reduces timeliness of map update. According to the update manner, some accidental environment changes (for example, a short period of heavy fog weather) may end or disappear before the map is updated, but the user vehicle 130 still uses an old map to perform map navigation during the environment change. This greatly reduces accuracy of map navigation, and is not conducive to improving driving experience of the vehicle owner.

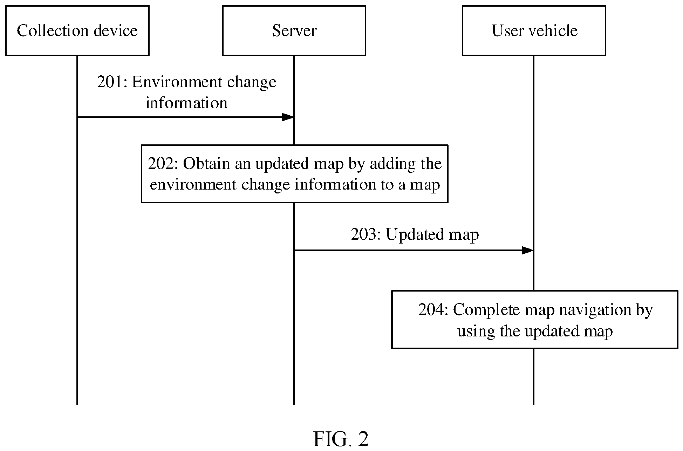

To resolve the foregoing problem that a map is not updated in time, FIG. 2 is an example of a schematic flowchart corresponding to a map update method commonly used in the industry. The method is applicable to a collection device, a server, and a user vehicle, for example, the road side unit 112, the server 120, and the user vehicle 130 shown in FIG. 1. As shown in FIG. 2, the method includes the following steps.

Step 201: When a road environment changes, a collection device generates environment change information, and sends the environment change information to a server.

For example, a road side unit regularly detects a weather condition on a fixed road section. If the road side unit finds that heavy fog weather occurs on the fixed road section in a detection, the road side unit generates environment change information based on location information of the fixed road section and detected heavy fog weather information, and reports the environment change information to the server in real time.

Step 202: The server obtains an updated map by adding the environment change information to a map.

According to the foregoing example, the server may first find, from the map based on the location information of the fixed road section included in the environment change information, a target road section corresponding to the fixed road section, and then display, on the target road section in the map, the heavy fog weather information included in the environment change information, to obtain the updated map. In this example, words "Heavy fog weather" are displayed on the target road section in the updated map.

Step 203: The server sends the updated map to a user vehicle.

Step 204: The user vehicle completes map navigation by using the updated map.

According to the foregoing example, it is assumed that an optimal route is to drive 20 km on a road A₁ at a vehicle speed not exceeding 80 km/h, and the environment change information indicates that heavy fog weather occurs on the road A₁. In this case, an optimal route planned by the user vehicle by using the updated map is still consistent with an optimal route before the update, and the only difference is that the words "Heavy fog weather" are displayed on the road A₁ of the optimal route.

It can be learned that, in the map update manner in the conventional technology, although the user vehicle can receive the updated map in real time, only the environment change information is added to the updated map, and a passing mode in the map does not change. Therefore, if the user vehicle is to pass in a passing mode that meets a current environment, a vehicle owner needs to at least independently decide a next passing mode based on the updated map. For example, the vehicle owner independently decides to reduce a vehicle speed based on the words "Heavy fog weather" added to the optimal route. It is clear that, because independent decision-making of the vehicle owner is involved, this map update manner is not only incompatible with the autonomous driving field, but also may cause inconsistency of passing modes due to subjective differences in decision-making of different vehicle owners, which is not conducive to unified scheduling and control of user vehicles on a same road section.

In view of this, this application provides a navigation method. In the method, a second passing mode applicable to a current environment and a first passing mode currently effective in a map are jointly used to guide automatic passing of a vehicle, so that a vehicle on a road section with an environment change can complete passing in real time in a passing mode that meets the current environment, and a same passing mode may be guided for a vehicle on the same road section without a vehicle owner participating in decision-making. This is effectively compatible with various map navigation scenarios including an autonomous driving scenario, and can implement unified scheduling and control of vehicles on a same road section. Therefore, a planned passing capability of a vehicle and passing experience of a vehicle owner are effectively improved.

It should be noted that the foregoing navigation method may be performed by a first device and a second device. The first device may be any device having a processing function, for example, the server or the collection device. The second device may be any device having a map navigation function, for example, the user vehicle, a mobile phone, or a navigator. In the following embodiments of this application, specific implementations of the navigation method is described by using an example in which the collection device, the server, and the user vehicle are jointly used for execution.

It should be noted that the terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not used to limit priorities or importance of the plurality of objects. For example, a first time difference, a second time difference, and a third time difference are merely used to distinguish different time differences calculated based on different information, but do not indicate different priorities, importance, or the like of the three time differences.

### Embodiment 1

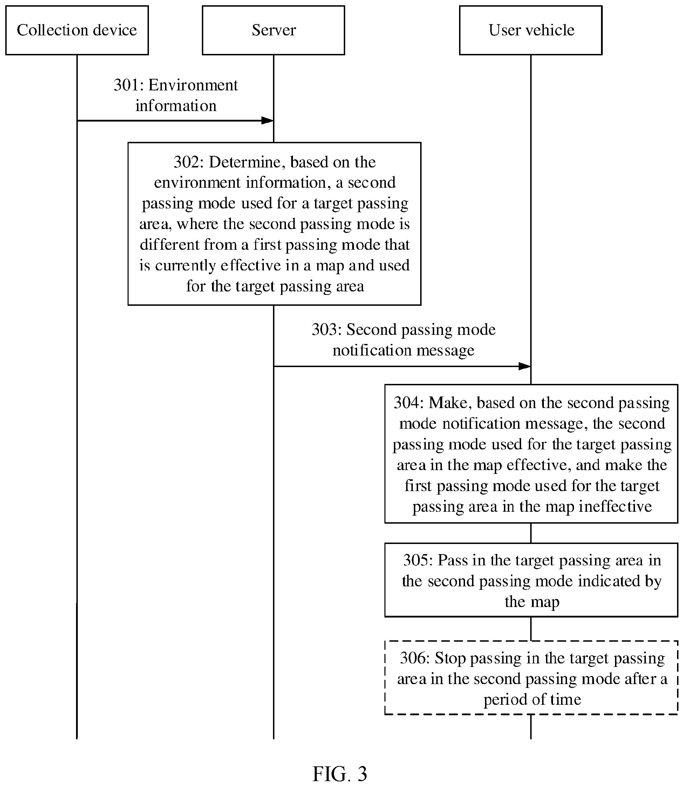

FIG. 3 is an example of a schematic flowchart corresponding to a navigation method according to Embodiment 1 of this application. The method is applicable to a collection device, a server, and a user vehicle, for example, one or more collection devices 110, the server 120, and the user vehicle 130 shown in FIG. 1. As shown in FIG. 3, the method includes the following steps.

Step 301: A collection device sends environment information to a server.

In step 301, the environment information may include all external impact information acting on a road traffic participant, such as road condition information, traffic facility information, clutter and geomorphology information, meteorological condition information, and even traffic activity information of other traffic participants. In this embodiment, the traffic participant may be specifically a user vehicle, and the environment information may include any information that can affect a passing mode of the user vehicle. For example, considering that the user vehicle needs to switch to a lower vehicle speed in a case of low visibility, the environment information may include visibility information (for details, refer to a visibility speed limit scenario in the following); considering that the user vehicle needs to switch to a vehicle speed that does not exceed a changed maximum speed limit value when a maximum speed limit value of a road section indicated by a sign changes, the environment information may include sign speed limit information (for details, refer to a sign speed limit scenario in the following); considering that the user vehicle needs to actively perform a lane change when a traffic incident occurs in front of the vehicle, to avoid an incident occurrence area, the environment information may include traffic incident information (for details, refer to a traffic incident scenario in the following); considering that the user vehicle needs to pass according to a changed steering when a lane steering is temporarily changed (for example, a U-turn is temporarily prohibited), the environment information may include lane steering information; considering that the user vehicle needs to pass in a direction indicated by a traffic police on a road section directed by the traffic police, the environment information may include traffic police indication information; and so on. This is not listed one by one herein.

In this embodiment of this application, the collection device may obtain the environment information according to a preset periodicity and report the environment information. During reporting, the collection device may report all environment information obtained each time to the server, or may report only changed environment information to the server. The changed environment information may be environment information changed compared with environment information obtained in a previous periodicity, or may be environment information changed compared with environment information in a map (for example, environment information corresponding to a default passing mode included at a first layer of the map). The environment information may include location information of a collected area. The area may be a dotted area, a linear area, or a planar area, and the location information of the area may be presented in a form of coordinates. For example, location information of the dotted area is represented by longitude and latitude coordinates of the dotted area in a geodetic coordinate system (geodetic coordinate system, GCS) or three-dimensional coordinates of the dotted area in a projected coordinate system (projected coordinate system, PCS), and location information of the linear area or location information of the planar area is represented by a longitude and latitude coordinate set of the linear area or the planar area in the GCS or a three-dimensional coordinate set of the linear area or the planar area in the PCS. Alternatively, the location information of the collected area may be presented in a form of a road section location associated with the area in the map (or a real world), and the road section location generally includes a road name, a road section name, and a road section range.

Step 302: The server determines, based on the environment information, a second passing mode used for a target passing area, where the second passing mode is different from a first passing mode that is currently effective in the map and used for the target passing area.

In step 302, the target passing area may include one independent area, or may include a plurality of non-adjacent areas. The area may be obtained by dividing the real world based on one or more of a road, a road section, a lane, a lane line, or an intersection. For example, an area may include a small section of a lane in the real world, or may include a road section between two intersections in the real world. Considering that the map is a mapping of the real world, it can also be said that the area is obtained by dividing the map. When a target passing area is represented, the target passing area may be presented by using a geographical location range of the target passing area in the real world, for example, a longitude and latitude coordinate set of the target passing area in the GCS or a three-dimensional coordinate set of the target passing area in the PCS, or the target passing area may be presented by using a road section location range of the target passing area in the map, for example, a road name, a road section name, and a road section range of the target passing area in the map. This is not specifically limited.

In this embodiment of this application, after receiving a plurality of pieces of environment information reported by various collection devices, the server may first select, from the plurality of pieces of environment information based on location information included in the plurality of pieces of environment information, target environment information located in a same target passing area, and then analyze target environment information corresponding to each target passing area, to determine the second passing mode used for each target passing area. If the server is a single server, the server may analyze each target passing area in sequence, and analyze a next target passing area after completing analysis on any target passing area. If the server is a server cluster including a plurality of servers, the server may analyze different target passing areas in parallel by using the plurality of servers, to improve data processing efficiency. In this way, navigation is performed by analyzing target passing areas instead of analyzing the entire map in a centralized manner. This can effectively reduce an amount of data analyzed each time, and help quickly obtain an analysis result of a single target passing area.

Further, when analyzing any target passing area, the server may first obtain the first layer of the map (for example, obtain locally, obtain through interaction with the user vehicle, or obtain through interaction with a third-party server). The first layer includes the default first passing mode used for passing in the target passing area. Then, the server may determine the second passing mode in any one of the following manners with reference to the first passing mode at the first layer:

### Determining manner 1:

The server first determines, based on the environment information in the target passing area, whether there is a sub-area whose passing mode is different from the first passing mode at the first layer because the sub-area is affected by the environment information in the target passing area. The sub-area may be a segment of road, a road section, a segment of lane, a segment of lane line, or the like. If there is no sub-area in the target passing area, it indicates that all first passing modes at the first layer for the target passing area meet a current environment of the target passing area, and the server does not need to replan a new passing mode for the user vehicle. Therefore, the server may directly end analysis on the target passing area. If there is a sub-area in the target passing area, it indicates that the first passing mode at the first layer for the sub-area does not meet a current environment of the sub-area, and the server may use the sub-area as a target sub-area, and generate, based on environment information located in the target sub-area, the second passing mode that can meet the current environment of the target sub-area.

For example, one map usually includes a plurality of first layers such as a road layer, a lane layer, and a lane line layer. The road layer maps each road in a real traffic environment, and includes a name, a location, and a direction of each road, and a maximum speed limit value of each road section on the road. The user vehicle passes by default through any road section at a vehicle speed not exceeding the maximum speed limit value of the road section indicated at the road layer. The lane layer maps each lane in the real traffic environment, and includes a road, a road section, an association relationship, and a steering of each lane, and an attribute of whether each lane is passable. The user vehicle may pass, according to a steering of the lane indicated at the lane layer, through a passable lane indicated at the lane layer. The lane line layer maps each lane line in the real traffic environment, and includes a lane on which each lane line is located and an attribute of whether the lane line is crossable. The user vehicle may perform a lane change on a crossable lane line indicated at the lane line layer. In this case:
Example 1: Each lane at the lane layer has a default maximum speed limit value of the lane. When a lane corresponds to a default maximum speed limit value of 100 km/h, the user vehicle needs to pass through the lane at a vehicle speed not exceeding 100 km/h. However, if the server finds, after analyzing the environment information reported by the collection device, that maximum visibility on the lane can only support a vehicle speed of 40 km/h, it means that the maximum speed limit value of the lane is changed to 40 km/h due to impact of current visibility of the lane. The maximum speed limit value is different from 100 km/h at the lane layer. Therefore, the lane may be used as a target sub-area, and a second passing mode corresponding to the lane is 40 km/h.
Example 2: A maximum speed limit value of some lanes is usually indicated by a sign set on the lane, and the sign at the lane layer has a default maximum speed limit value of the sign. When the default maximum speed limit value of the sign is 80 km/h, the user vehicle needs to pass through the effect lane of the sign at a vehicle speed not exceeding 80 km/h. However, if the server finds, after analyzing the environment information reported by the collection device, that the maximum speed limit value of the lane indicated by the sign is changed to 60 km/h, it means that the maximum speed limit value of the lane is changed to 60 km/h due to impact of a current sign speed limit change. The maximum speed limit value is different from 80 km/h at the lane layer. Therefore, the lane may be used as a target sub-area, and a second passing mode corresponding to the lane is 60 km/h.
Example 3: When the lane layer displays a lane being passable, the user vehicle can normally travel on the lane. However, if the server finds, after analyzing the environment information reported by the collection device, that a traffic incident occurs on the lane, it means that the lane is impassable due to impact of the current traffic incident, and the impassable attribute is different from the passable attribute at the lane layer. Therefore, the lane may be used as a target sub-area, and a second passing mode corresponding to the lane is impassable.
Example 4: When lane lines on both sides of a lane are displayed as solid lines at the lane line layer, the user vehicle cannot cross the lane lines on both sides of the lane, and can only pass through the lane in sequence. However, if the server finds, after analyzing the environment information reported by the collection device, that a traffic incident (for example, there is a sudden throw, and a traffic accident is likely to occur if avoidance is not performed) that needs to be urgently avoided by the user vehicle occurs on the lane, it means that the lane lines on both sides of the lane is crossable due to impact of the current emergency traffic incident, and the crossable attribute is different from the uncrossable attribute at the lane line layer. Therefore, the lane lines on both sides of the lane may be used as a target sub-area, and a second passing mode corresponding to the lane lines on both sides of the lane is crossable.

It should be understood that the foregoing examples are merely described by using an entire lane as an example. In an actual operation, the target sub-area may alternatively include only a small segment of the entire lane, or lane lines on one side or both sides of the small segment of lane, and other lanes and lane lines other than the small segment of lane or lane lines are not used as the target sub-area.

### Determining manner 2:

In addition to the first passing mode, the first layer may further include at least one second passing mode. The first passing mode is effective by default, and the at least one second passing mode is ineffective by default. The first passing mode and the at least one second passing mode may be stored at the first layer in a form of an update rule, and any update rule may include the following content:
a rule identifier, uniquely indicating an update rule, and usually represented by a number of the update rule at the first layer;
an application scope, indicating a sub-area to which the update rule is applicable, and usually being a road segment, a road section, a lane, a lane line, or the like;
the first passing mode, indicating a passing mode that is effective by default when no environment information exists; and
the at least one second passing mode and an effectiveness condition corresponding to each of the at least one second passing mode, indicating a passing mode that is ineffective by default when no environment information exists and that may be triggered to take effect when the environment information exists, and a condition that needs to be met for each passing mode to be triggered to take effect.

According to the update rule, in an implementation, after determining the environment information corresponding to the target passing area, the server may first associate, based on the location information included in the environment information, the location information with an application scope of each update rule preset at the first layer, to find a target update rule applicable to the environment information in each sub-area, and further determine whether the environment information in each sub-area meets an effectiveness condition corresponding to a second passing mode in the target update rule in the sub-area. If the environment information in each sub-area does not meet the effectiveness condition corresponding to the second passing mode in the target update rule in the sub-area, it is determined that the current environment of the sub-area is still applicable to the default first passing mode, and the server may end analysis on the sub-area. If the environment information in each sub-area meets the effectiveness condition corresponding to the second passing mode in the target update rule in the sub-area, the server may use the met second passing mode as the second passing mode that is corresponding to the sub-area and that is determined based on the environment information.

It should be noted that the first layer in the foregoing two manners may correspond to a static layer of the map. The static layer of the map is a mapping of a traffic topology on a real road, and generally includes content such as a road, a lane, a lane line, and a first passing mode that is effective by default.

Step 303: The server sends a second passing mode notification message to the user vehicle.

In step 303, when the server performs analysis on each target passing area, the server may further send, in real time after determining the second passing mode used for any target passing area, a second passing mode notification message corresponding to the target passing area to a user vehicle that is currently in the target passing area, to improve data processing efficiency for a single target passing area, and help the user vehicle in the target passing area navigate out, in time, a passing mode suitable for a current environment. In addition, passing of the vehicle is controlled by using the target passing area as a basic unit, so that the second passing mode notification message corresponding to the entire map does not need to be sent to all user vehicles. Therefore, a communication loss is further reduced.

Step 304: The user vehicle makes, based on the second passing mode notification message, the second passing mode used for the target passing area in the map effective, and makes the first passing mode used for the target passing area in the map ineffective.

In step 304, the first passing mode is still stored in the map after being ineffective. That is, an updated map includes both the effective second passing mode and the ineffective first passing mode, and the map before the update may include both the ineffective second passing mode and the effective first passing mode, or may include the effective first passing mode but not include the second passing mode. It can be learned that, in this application, making a passing mode ineffective is not overwriting or deleting the passing mode, instead, the passing mode exists but is not used. In this way, at least two passing modes always coexist in the updated map. Once the current environment is no longer applicable to the effective second passing mode, the user vehicle may directly switch the passing mode in the updated map. This facilitates timely switching to a passing mode that meets the current environment while reducing a communication loss.

In this embodiment of this application, step 303 and step 304 may be implemented in any one of the following manners.

### Implementation 1

In a map (referred to as a local map) locally stored in the user vehicle, the first layer includes both the first passing mode and the second passing mode that are used in the target passing area. The first passing mode is effective by default, and the second passing mode is ineffective by default. In this case, after determining the second passing mode, the server may send first indication information to the user vehicle, and the first indication information indicates to make the first passing mode ineffective and make the second passing mode effective. In this way, after receiving the first indication information, the user vehicle may make, based on the first indication information, the currently effective first passing mode at the first layer of the local map ineffective, and make the currently ineffective second passing mode at the first layer of the local map effective, to obtain the updated map.

Implementation 1 is applicable to a scenario in which both the first passing mode and the second passing mode are stored in the local map of the user vehicle. The second passing mode takes effect in a manner of sending second passing mode effectiveness indication information, so that the full second passing mode does not need to be sent, to help reduce communication overheads.

It should be noted that "the map locally stored in the user vehicle" in the foregoing implementation is merely an example. Alternatively, the map may be obtained by the user vehicle in real time by interacting with a server or another third-party server, and may not be stored locally in the user vehicle.

### Implementation 2

In a map locally stored in the user vehicle, the first layer includes the first passing mode that is used for the target passing area and that is effective by default, but does not include the second passing mode generated by the server. In this case, after determining the second passing mode, the server may directly send the second passing mode to the user vehicle. For example, after generating the second layer including the second passing mode, the server sends the second passing mode to the user vehicle in a form of the second layer of the map, or carries the second passing mode in a notification message and sends the notification message to the user vehicle. In this way, after receiving the second layer or notification message carrying the second passing mode, the user vehicle may make the currently effective first passing mode at the first layer of the local map ineffective, and make the received second passing mode carried at the second layer of the map effective, to obtain the updated map. Alternatively, the second passing mode carried in the notification message is added to an original second layer of the local map and takes effect, to obtain the updated map.

Implementation 2 is applicable to a scenario in which the local map of the user vehicle does not include the second passing mode.

It should be noted that the second layer described in Implementation 2 is different from a dynamic layer of a current map. The dynamic layer of the current map is a mapping of a road environment, and generally indicates abnormal weather on the road and a change of a traffic environment. However, the second layer in Implementation 2 is a mapping of the second passing mode applicable to the current environment, and exists as a supplementary layer of the first layer. When the second passing mode at the second layer is effective, the first passing mode in an area that is at the first layer and has a same effect range as that of the second layer is ineffective. When the first passing mode at the first layer is effective, the second passing mode in an area that is at the second layer and has a same effect range as that of the first layer is ineffective.

### Implementation 3

After determining the second passing mode, the server may first update the first layer of the local map by using the second passing mode, obtain an updated first layer by making the second passing mode at the first layer effective and making the first passing mode at the first layer ineffective, and then send the updated first layer to the user vehicle. In this way, after receiving the updated first layer, the user vehicle may make the first layer of the local map ineffective, and make the received updated first layer effective, to obtain the updated map.

In Implementation 3, the server automatically updates the first layer, so that working pressure of the user vehicle can be reduced. This is applicable to a scenario in which the user vehicle has a weak processing function.

Step 305: The user vehicle passes in the target passing area in the second passing mode indicated by the map.

In step 305, the second passing mode used for the target passing area in the updated map of the user vehicle is effective. Therefore, if the user vehicle determines that a current location of the user vehicle is in the target passing area, the user vehicle may pass in the effective second passing mode indicated by the updated map. If the user vehicle determines that the current location of the user vehicle is outside the target passing area, the user vehicle may pass in a passing mode that is effective in a current passing area and that is indicated by the map. The passing mode that is effective in the current passing area may be the first passing mode that is effective by default, or may be a second passing mode that is triggered to be effective in another target passing area.

For example, after making the second passing mode effective and making the first passing mode ineffective, the user vehicle may further perform the following step 306.

Step 306: The user vehicle stops passing in the target passing area in the second passing mode after a period of time.

In step 306, that the user vehicle stops passing in the target passing area in the second passing mode after a period of time may be that the user vehicle makes the second passing mode used for the target passing area in the map ineffective, or makes the first passing mode used for the target passing area in the map effective again, or makes a default passing mode used for the target passing area in the map effective, or makes a new passing mode determined based on the environment information effective, or the like. The operation of making, by the user vehicle, the second passing mode ineffective may be triggered and executed by the server based on a first ineffectiveness condition, or may be automatically executed by the user vehicle based on a second ineffectiveness condition. The following describes several possible ineffectiveness manners by using examples.

Ineffectiveness manner 1: The server considers by default that the collection device reports the environment information according to a preset reporting periodicity (that is, first preset duration, where the preset reporting periodicity may be carried by the collection device in the environment information and notified to the server), and the collection device reports the environment information only when determining that current environment information triggers a new passing mode that is different from the first passing mode used for the target passing area in the map. In this case, if the server receives, at a moment, the environment information reported by the collection device, but does not receive new environment information reported by the collection device after the preset reporting periodicity carried in the environment information or duration slightly greater than the preset reporting periodicity expires, it indicates that the current environment information does not trigger the new passing mode that is different from the first passing mode used for the target passing area in the map, and the second passing mode currently effective in the map of the user vehicle is no longer applicable to the current environment of the target passing area. Instead, the first passing mode that is effective by default in the map is applicable to the current environment of the target passing area again. Therefore, the server determines that the first ineffectiveness condition is currently met, and the server may send first ineffectiveness indication information to the user vehicle. After receiving the first ineffectiveness indication information, the user vehicle may make, based on an indication of the first ineffectiveness indication information, the second passing mode used for the target passing area in the map ineffective, and make the first passing mode used for the target passing area in the map effective again.

Ineffectiveness manner 2: The collection device reports the environment information according to the preset reporting periodicity, and the server sends the second passing mode notification message to the user vehicle only when determining that the environment information triggers the new passing mode that is different from the first passing mode used for the target passing area in the map. In this case, if the server determines that the environment information newly reported by the collection device does not trigger the new passing mode that is different from the first passing mode used for the target passing area in the map, or the server does not generate a new second passing mode notification message within duration that exceeds one preset generation periodicity, it indicates that the second passing mode currently effective in the map of the user vehicle is no longer applicable to the current environment of the target passing area. Instead, the first passing mode that is effective by default in the map is applicable to the current environment of the target passing area again. Therefore, the server may send the first ineffectiveness indication information to the user vehicle. After receiving the first ineffectiveness indication information, the user vehicle may make, based on the indication of the first ineffectiveness indication information, the second passing mode used for the target passing area in the map ineffective, and make the first passing mode used for the target passing area in the map effective again.

Ineffectiveness manner 3: When the server determines that the environment information newly reported by the collection device no longer meets the effectiveness condition of the second passing mode used for the target passing area in the map, it indicates that the second passing mode currently effective in the map of the user vehicle is no longer applicable to the current environment of the target passing area. The server may determine that the first effectiveness condition is currently met. In this case, the server may send second ineffectiveness indication information to the user vehicle. After receiving the second ineffectiveness indication information, the user vehicle may make, based on an indication of the second ineffectiveness indication information, the second passing mode used for the target passing area in the map ineffective.

Ineffectiveness manner 4: When the new passing mode generated by the server based on the newly received environment information is different from the second passing mode, it indicates that the second passing mode currently effective in the map of the user vehicle is no longer applicable to the current environment of the target passing area, and the server may determine that the first ineffectiveness condition is currently met. In this case, the server may send second ineffectiveness indication information to the user vehicle. After receiving the second ineffectiveness indication information, the user vehicle may make, based on an indication of the second ineffectiveness indication information, the second passing mode used for the target passing area in the map ineffective.

Ineffectiveness manner 5: The second passing mode further corresponds to preset effective duration, and the preset effective duration may be obtained by the server by performing a synchronization operation with the user vehicle, or may be fixed duration preset in the server, or may be variable duration set by the server based on different scenarios. In this case, after sending the second passing mode notification message to the user vehicle, the server may further start a timer to perform timing. When the timing exceeds the preset effective duration corresponding to the second passing mode, it is determined that the first ineffectiveness condition is currently met, and the server may send the second ineffectiveness indication information to the user vehicle. After receiving the second ineffectiveness indication information, the user vehicle may make, based on the indication of the second ineffectiveness indication information, the second passing mode used for the target passing area in the map ineffective.

Ineffectiveness manner 6: The server may further send effective duration indication information of the second passing mode to the user vehicle. The effective duration indication information indicates the user vehicle to stop passing in the target passing area in the second passing mode after the preset effective duration expires. The preset effective duration may be obtained by the user vehicle by performing a synchronization operation with the server, or may be carried in the effective duration indication information of the second passing mode and sent to the user vehicle, or may be fixed duration preset in the user vehicle, or may be variable duration set by the user vehicle based on different scenarios. In this case, after receiving the second passing mode notification message, the user vehicle may start the timer to perform timing. When the timing exceeds the preset effective duration corresponding to the second passing mode, it is determined that the second ineffectiveness condition is currently met, and the user vehicle may immediately make the second passing mode used for the target passing area in the map ineffective.

Ineffectiveness manner 7: The user vehicle considers by default that the server delivers the second passing mode notification message according to a preset delivery periodicity (that is, second preset duration, where the preset delivery periodicity may be carried by the server in the second passing mode notification message and notified to the user vehicle), and the server generates and delivers the second passing mode notification message only when determining that the current environment information triggers the new passing mode that is different from the first passing mode used for the target passing area in the map. In this case, if the user vehicle receives, at a moment, the second passing mode notification message delivered by the server, but does not receive a new second passing mode notification message delivered by the server after the preset delivery periodicity carried in the second passing mode notification message or duration slightly greater than the preset delivery periodicity expires, it indicates that the second passing mode currently effective in the map of the user vehicle is no longer applicable to the current environment. Instead, the first passing mode currently ineffective in the map is applicable to the current environment again. Therefore, the user vehicle determines that the second ineffectiveness condition is currently met. The user vehicle can directly make the second passing mode used for the target passing area in the map ineffective, and can further make the first passing mode used for the target passing area in the map effective again.

Ineffectiveness manner 8: The user vehicle monitors a location of the user vehicle in real time, and when it is determined that the location of the user vehicle is no longer in the target passing area corresponding to the second passing mode, it indicates that the user vehicle has left the target passing area, and the second ineffectiveness condition is currently met. Therefore, the user vehicle may make the second passing mode used for the target passing area in the map ineffective.

It should be noted that the foregoing describes only several possible ineffectiveness manners as examples. In this application, it is not limited to use only these ineffectiveness manners. Any solution in which the second passing mode can be ineffective after a period of time falls within the protection scope of this application. This is not listed one by one in this application.

In Embodiment 1, the second passing mode applicable to the current environment is determined based on the environment information, so that the second passing mode and the first passing mode currently effective in the map are jointly used to guide passing of the user vehicle. In this manner, by controlling effectiveness and ineffectiveness of a passing mode, the user vehicle on a road section with an environment change can complete passing in real time in a passing mode that meets the current environment, and a vehicle owner does not need to perform decision-making. This can be effectively compatible with various map navigation scenarios including an autonomous driving scenario, and helps improve a planned passing capability of the user vehicle. In addition, this design can further guide a same passing mode for user vehicles on a same road section. This helps implement unified scheduling and control on the user vehicles on the same road section.

Based on Embodiment 1, the following further describes specific implementations of the navigation method by using Embodiment 2 and Embodiment 3.

### Embodiment 2

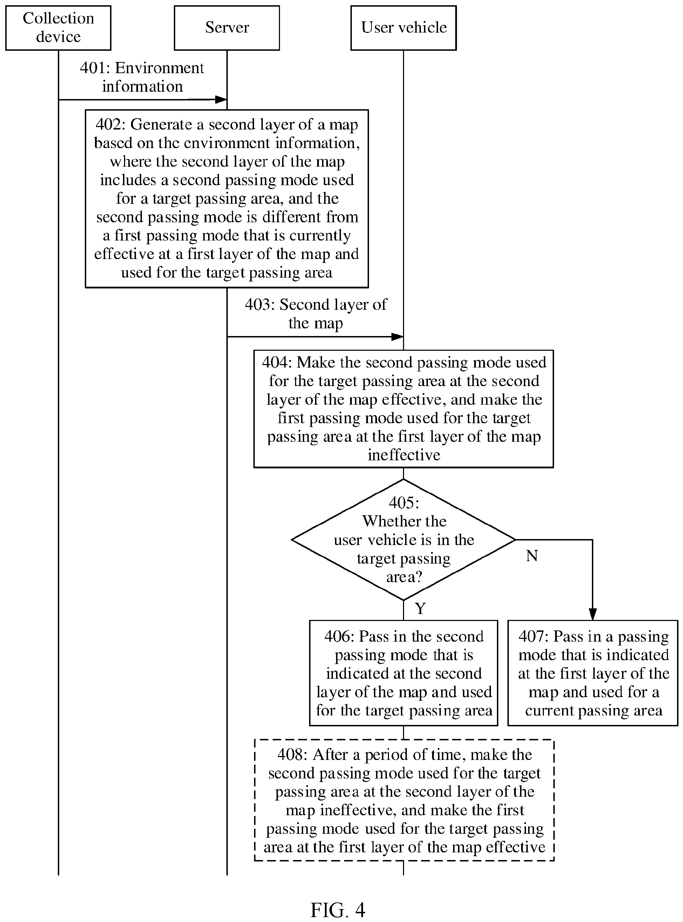

FIG. 4 is an example of a schematic flowchart corresponding to a navigation method according to Embodiment 2 of this application. The method is applicable to a collection device, a server, and a user vehicle, for example, one or more collection devices 110, the server 120, and the user vehicle 130 shown in FIG. 1. As shown in FIG. 4, the method includes the following steps.

Step 401: A collection device sends environment information to a server.

Step 402: The server generates a second layer of a map based on the environment information, where the second layer of the map includes a second passing mode used for a target passing area, and the second passing mode is different from a first passing mode that is currently effective at a first layer of the map and used for the target passing area.

Step 403: The server sends the second layer of the map to a user vehicle.

In an optional implementation, the server may generate the second layer of the map according to a preset generation periodicity, and may deliver the second layer of the map according to a preset delivery periodicity. Any delivered second layer may include one or more pieces of the following content.

An identifier of the target passing area is a piece of content that needs to be included at the second layer, and indicates a passing area whose passing mode is affected by the environment information and is different from the first passing mode that is currently effective at the first layer. The identifier of the target passing area may be defined by location information of the target passing area, for example, may be represented by using coordinates or a coordinate set of the target passing area in a real world, or may be represented by using a road section location of the target passing area at the first layer. This is not limited.

The second passing mode used for the target passing area is a piece of content that needs to be included at the second layer, and indicates the second passing mode that is applicable to the target passing area and that is determined based on the environment information. It should be understood that when a plurality of target sub-areas whose passing modes are different from the first passing mode exist in the target passing area, the second layer may further include location information of the plurality of target sub-areas and the second passing mode applicable to each of the plurality of target sub-areas.

A number of the second layer is a piece of content optionally included at the second layer, and indicates sorting of the second layer generated this time in all second layers generated by the server. Generally, numbers of the second layers generated by the server may alternatively be divided based on the target passing area, and second layers corresponding to any target passing area increase in ascending order of 1, 2, 3, .... In this way, the number of the second layer and the identifier of the corresponding target passing area may form a unique identifier of the second layer, so that the user vehicle obtains, by using the number, a latest second layer applicable to the target passing area.

An identifier of the environment information is a piece of content optionally included at the second layer, and indicates an environment factor that causes a change of a passing mode, including abnormal weather names such as fog, rain, snow, frost, sand and dust, hail, or thunder and lightning, traffic incident names such as road debris, vehicle retrograde, road construction, traffic control, road closure, traffic accident, temporary inspection, vehicle inspection, road obstacles, abnormal parking, or personnel intrusion, or the like. The identifier of the environment information belongs to redundant information at the second layer. By adding the redundant information, when the user vehicle adjusts the passing mode, the environment factor that causes the change of the passing mode is displayed to a vehicle owner, for example, displayed on a display screen of an in-vehicle infotainment of the user vehicle, so that the vehicle owner can learn about a current environment in time, to improve driving experience.

A generation moment is a piece of content optionally included at the second layer, indicates an occurrence moment at which the server generates the second layer, and may be set to a moment between a start moment at which the server performs current generation and an end moment at which the second layer is generated, for example, an intermediate moment between the start moment and the end moment.

The preset delivery periodicity is a piece of content optionally included at the second layer, and indicates a time interval at which the server delivers second layers generated in two consecutive times. When the server generates the second layer according to the preset generation periodicity, a time interval between two consecutive times of delivery in the preset delivery periodicity needs to be greater than a time interval between two consecutive times of generation in the preset generation periodicity, for example, may be set to 1.5 times the time interval between two consecutive times of generation in the preset generation periodicity, so as to ensure as much as possible that the second layer is successfully generated before the second layer is delivered.

A delivery moment is a piece of content optionally included at the second layer, indicates an occurrence moment of delivering the second layer generated this time to the user vehicle, and may be generally set to a start moment of delivering the second layer by the server to the user vehicle.

It should be noted that the foregoing content is merely an example for describing one or more pieces of content that may be included at the second layer. In an implementation, the second layer may further include other content, for example, an identifier of the server and a detection moment of the environment information. This is not listed one by one in this application.

For example, when the second layer includes both the generation moment and the delivery moment, the server may further calculate a first time difference between the generation moment and the delivery moment before delivering the second layer. When the first time difference is large (for example, exceeds 2 minutes), it indicates that the second layer is not delivered to the user vehicle for long time after being generated, and the user vehicle may have driven away from an effect of the second layer. In this case, the server may no longer deliver the second layer to the user vehicle, to reduce unnecessary communication overheads as much as possible. Further, when the second layer whose first time difference is large appears for a plurality of times, the server may further generate a first alarm message and push the first alarm message to background operation and maintenance personnel, to promptly rectify a fault that occurs in the server, and restore an instant receive-and-send capability of the server.

Step 404: The user vehicle makes the second passing mode used for the target passing area at the second layer of the map effective, and makes the first passing mode used for the target passing area at the first layer of the map ineffective.

In step 404, when the server does not send the second layer of the map to the user vehicle, the user vehicle considers by default that the first layer of the map is effective. Even if the map includes an old second layer (for example, set to be ineffective before) sent at a historical moment, because the second layer of the map is ineffective and the first layer of the map is effective, the user vehicle also passes in the target passing area in the first passing mode that is of the target passing area and that is indicated at the first layer of the map. After the server sends the second layer of the map to the user vehicle, the user vehicle considers by default that the second layer of the map is effective, and the first passing mode that is at the first layer of the map and in a same effect range (that is, the target passing area) as the second layer is ineffective. In this case, because the second layer of the map is effective and the first layer of the map is ineffective, the user vehicle passes in the target passing area in the second passing mode that is of the target passing area and that is indicated at the second layer of the map.

In an optional implementation, each of the first layer and the second layer has a priority, and a priority of the second layer is higher than a priority of the first layer. In this case, effectiveness and ineffectiveness of the first layer and the second layer may alternatively be implemented in a priority manner. Examples are as follows.

Implementation 1: After receiving the second layer, the user vehicle may directly superimpose the second layer on the first layer. Because the priority of the second layer is higher than the priority of the first layer, the original first passing mode of the target passing area at the first layer is covered by the second passing mode at the second layer (covered at the layer means not shown, but not deleted). Layer elements (such as color, shape, grayscale, and transparency) other than the original first passing mode and layer elements of a non-target passing area remain unchanged. That is, at an updated first layer, the second passing mode in the target passing area is effective, and the first passing mode in another passing area other than the target passing area is effective. The user vehicle can directly determine, by referring to a passing mode displayed at the updated first layer, a passing mode used to pass through a current location.

Implementation 2: The user vehicle separately stores the second layer with the higher priority and the first layer with the lower priority. The second layer with the higher priority is effective, and the first layer with the lower priority is ineffective. In this implementation, the user vehicle may first invoke the second layer with the higher priority, and if it is determined that the user vehicle is just in the target passing area at the second layer, the user vehicle can directly determine a current passing mode with reference to the second layer. If it is determined that the user vehicle is not in the target passing area at the second layer, the user vehicle invokes the first layer with the lower priority, and determines the current passing mode with reference to the first layer.

In the foregoing implementation, the priority of the first layer or the priority of the second layer may be set by the server when generating the first layer or the second layer, or may be set by the user vehicle after receiving the first layer or the second layer sent by the server. For example, after generating the first layer, the server first sets a low priority for the first layer and then delivers the first layer to the user vehicle, and after generating the second layer, the server first sets a high priority for the second layer and then delivers the second layer to the user vehicle. Alternatively, after generating the first layer, the server first sets a low priority for the first layer and then delivers the first layer to the user vehicle, and directly delivers the second layer to the user vehicle after generating the second layer, and the user vehicle sets a high priority for the second layer. Alternatively, after generating the first layer and the second layer, the server directly delivers the first layer and the second layer to the user vehicle, and the user vehicle sets a low priority for the first layer and sets a high priority for the second layer, and the like.

Step 405: The user vehicle determines whether the user vehicle is in the target passing area at the second layer.

If the user vehicle is in the target passing area, step 406 is performed.

If the user vehicle is outside the target passing area, step 407 is performed.

In step 405, the user vehicle may locate a current coordinate location of the user vehicle by using an in-vehicle positioning module, and obtain location information of the target passing area included at the second layer. When the location information of the target passing area is presented in a form of coordinates or a coordinate set in the real world, the user vehicle may directly compare current location coordinates of the user vehicle with the coordinates or the coordinate set corresponding to the target passing area. If the current location coordinates of the user vehicle are the same as or included in the coordinates or coordinate set corresponding to the target passing area, it is determined that the user vehicle is in the target passing area; or if the current location coordinates of the user vehicle are different from or not included in the coordinates or coordinate set corresponding to the target passing area, it is determined that the user vehicle is outside the target passing area. When the location information of the target passing area is presented by using a road section location in the map, the user vehicle may first associate the current coordinate location of the user vehicle with a road, a road section, a road section range, a lane, and the like in the map, to obtain a current road section location of the user vehicle, and then compare the current road section location of the user vehicle with the road section location corresponding to the target passing area. If the road section location corresponding to the user vehicle is the same as or included in the road section location corresponding to the target passing area, it is determined that the user vehicle is located in the target passing area; or if the road section location corresponding to the user vehicle is different from or not included in the road section location corresponding to the target passing area, it is determined that the user vehicle is located outside the target passing area.

For example, when the second layer further includes the delivery moment, before using the second layer, the user vehicle may further calculate a second time difference between a receiving moment at which the user vehicle receives the second layer and the delivery moment included at the second layer. When the second time difference is large (for example, exceeds 2 minutes), it indicates that the second layer is transmitted between the server and the user vehicle for very long time, and the second layer received by the user vehicle this time is generated by the server long time ago. The user vehicle may have already driven away from the target passing area at the second layer. In this case, the user vehicle may no longer use the second layer to plan a passing mode of the user vehicle, so as to save unnecessary resource waste in the user vehicle. When the second layer with a large second time difference appears for a plurality of times, it indicates that a fault occurs in a communication link between the server and the user vehicle. The user vehicle may further generate a second alarm message and report the second alarm message to the server, so that maintenance personnel on a server side can promptly rectify the fault in the link between the server and the user vehicle, to restore real-time delivery at the second layer.

Step 406: The user vehicle passes in the second passing mode that is indicated at the second layer of the map and used for the target passing area.

In step 406, when the user vehicle is in the target passing area, it indicates that a clear environment change occurs on a road section on which the user vehicle currently passes, and the first passing mode at the first layer is no longer applicable to a current road section. In this case, the second passing mode determined based on the environment information of the current road section is preferably selected, so that the current passing mode of the user vehicle meets a dynamic environment of the current road section, to effectively improve driving safety of the user vehicle.

Step 407: The user vehicle passes in a passing mode that is indicated at the first layer of the map and used for a current passing area.

In step 407, when the user vehicle is outside the target passing area, it indicates that a clear environment change does not occur on a road section on which the user vehicle currently passes, and the passing mode at the first layer is still applicable to a current road section. In this case, the passing mode indicated at the first layer is preferably used, so that the user vehicle can continue to pass in the previous passing mode when a road section environment is good, to improve driving stability of the user vehicle.

Step 408: The user vehicle makes, after a period of time, the second passing mode used for the target passing area at the second layer of the map ineffective, and makes the first passing mode used for the target passing area at the first layer of the map effective.

In step 408, that the user vehicle makes the second passing mode used for the target passing area at the second layer ineffective may mean that the user vehicle deletes the second passing mode at the second layer, or may mean that the user vehicle modifies the priority of the second passing mode at the second layer to be lower than the priority of the first passing mode at the first layer, or may mean that the user vehicle adds an ineffectiveness label to the second passing mode at the second layer. For specific operations of ineffectiveness and effectiveness of the user vehicle, refer to Embodiment 1. Details are not described herein again.

In Embodiment 2, autonomous driving of the user vehicle can be jointly indicated by using the second layer and the first layer. The passing mode at the second layer is applicable to the current environment, and the passing mode at the first layer is a default mode. In this case, this manner enables the user vehicle to switch the passing mode in time based on the second layer after the environment information changes, and helps improve driving safety of the user vehicle. In addition, autonomous switching of the passing mode is implemented without participation of the vehicle owner. This effectively improves flexibility and intelligence of autonomous driving, and improves a planned passing capability of the user vehicle during autonomous driving.

The following describes applications of the navigation method in Embodiment 2 in three specific scenarios by using examples.

### Scenario 1: Visibility speed limit scenario

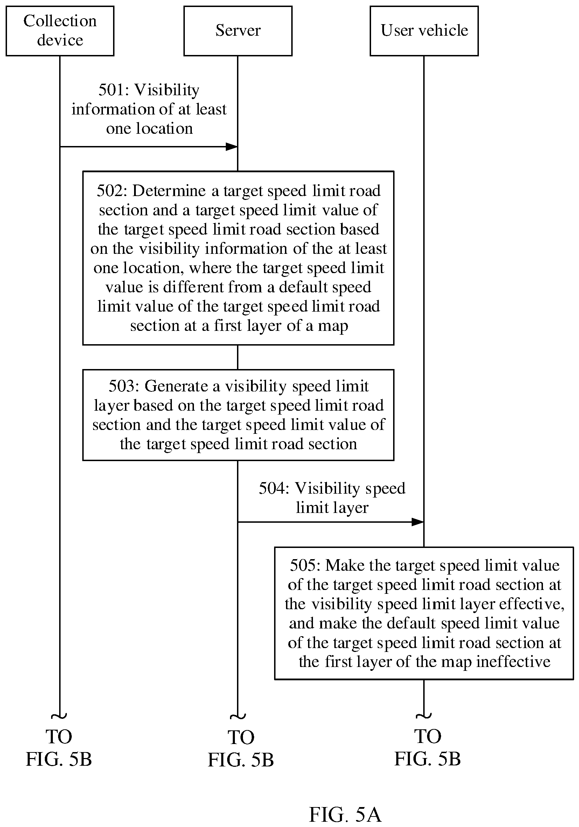

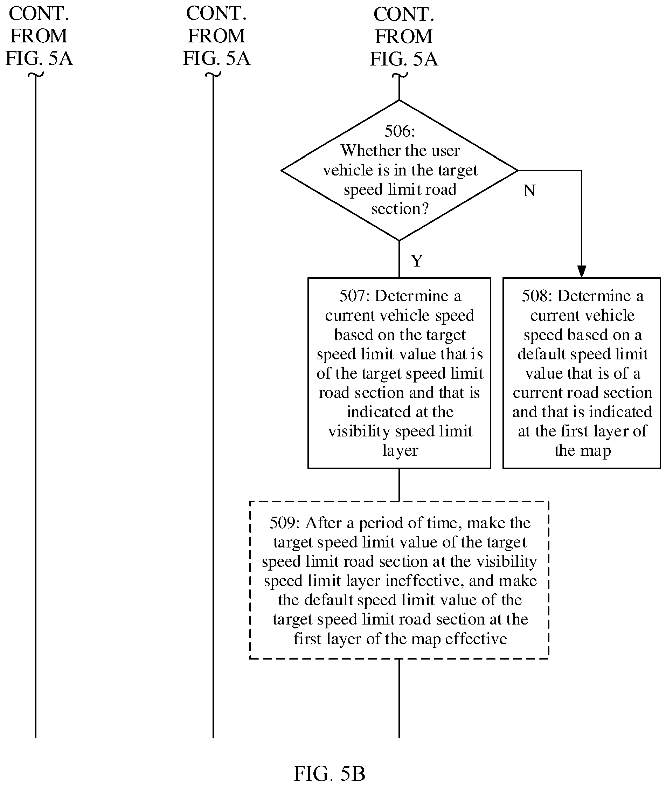

FIG. 5A and FIG. 5B are an example of a schematic application flowchart of Embodiment 2 in a visibility speed limit scenario. The method is applicable to a collection device, a server, and a user vehicle, for example, one or more collection devices 110, the server 120, and the user vehicle 130 shown in FIG. 1. In this example, the collection device 110 may be any device that can sense a visibility value corresponding to a current environment, for example, may include both the road side unit 112 and the crowd-sourcing vehicle 113. As shown in FIG. 5A and FIG. 5B, the method includes the following steps.

Step 501: A collection device reports visibility information of at least one location to a server.

In step 501, the collection device may detect an observation location according to a preset detection periodicity, to obtain a visibility value of the observation location in each preset detection periodicity. After the visibility value is obtained through any detection, if the collection device performs reporting in Ineffectiveness manner 2 in Embodiment 1, the collection device may directly generate visibility information at the observation location based on the visibility value obtained through the current detection and other related information of the current detection, and report the visibility information to the server. If the collection device performs reporting in Ineffectiveness manner 1 in Embodiment 1, the collection device further needs to compare the visibility value with a visibility range under a normal meteorological condition (that is, a meteorological condition, for example, a sunny day, that does not affect a default speed limit of a road section). When the visibility value is clearly lower than a lowest visibility value in the visibility range under the normal meteorological condition, it indicates that abnormal weather exists at the observation location at a current moment, and a speed limit needs to be re-planned for a user vehicle based on a currently detected visibility value. In this case, the collection device may further generate visibility information at the observation location based on the visibility value obtained through the current detection and other related information of the current detection, and report the visibility information to the server. When the visibility value is not lower than the lowest visibility value in the visibility range under the normal meteorological condition, it indicates that the observation location is meteorologically normal at the current moment, and the speed limit does not need to be replanned. Therefore, the server may directly end the analysis, and wait to start a next detection until a next detection periodicity arrives.

In this embodiment of this application, the visibility information reported by the collection device at any time may include one or more pieces of the following content.

Location information is a piece of content that needs to be included in the visibility information, indicates the observation location detected this time, and may be generally replaced by a location of the collection device that performs this detection. When a crowd-sourcing vehicle is used as the collection device, a location of the crowd-sourcing vehicle may be actively located by an in-vehicle positioning module disposed in the crowd-sourcing vehicle. When a road side unit is used as the collection device, a location of the road side unit may be a fixed location preset in the road side unit when the road side unit is installed. The location information may be presented by using a coordinate location of the observation location in a real world, for example, longitude and latitude coordinates of the observation location in a GCS or three-dimensional coordinates of the observation location in a PCS, or may be presented by using a road section location of the observation location in a map. This is not specifically limited.

The visibility value is a piece of content that needs to be included in the visibility information, and indicates a maximum distance that a person with normal vision can recognize a target object from a background at the observation location detected this time, or a minimum distance that last features of the target object disappear from the background. A unit is generally set to meters. The collection device may obtain the visibility value through detection in a plurality of manners. For example, the collection device may use a built-in laser radar to emit transmitting laser light with a specific wavelength and receive reflected receiving laser light, draw a distance-based power change curve of the receiving laser light to measure an atmospheric extinction coefficient, and then calculate the visibility value based on the atmospheric extinction coefficient. For another example, the collection device may use a built-in light source to emit a light beam to pass through an atmospheric column between two fixed points, and measure an air column transmittance of the light beam through the atmospheric column to calculate the visibility value. For still another example, the collection device may use a built-in digital camera to capture a preselected target object and background to obtain an environment image carrying a target object image and a background image, and find a maximum distance at which the target object image and the background image can be clearly distinguished from the environment image, or find a minimum distance at which a feature of the target object image disappears in the background image, to use the minimum distance as the visibility value; and so on.

An identifier of the collection device is a piece of content optionally included in the visibility information, and indicates the collection device that performs this detection. When the collection device is a road side unit, an identifier of the road side unit may be named based on a name of a road on which the road side unit is located in the map, a road section name, and a number of each road side unit disposed on the road section. For example, an identifier of a 20^{th} road side unit disposed on the right section of a road A1 may be named A1_right 20. When the collection device is a crowd-sourcing vehicle, an identifier of the crowd-sourcing vehicle may be named by using a vehicle identification number (vehicle identification number, VIN) of the crowd-sourcing vehicle.

A number of the visibility information is a piece of content optionally included in the visibility information, and indicates a sequence of visibility information generated by the current detection in all visibility information generated by the collection device. The number of the visibility information is combined with an identifier of the collection device that generates the visibility information, to uniquely identify the visibility information. Generally, numbers of all pieces of visibility information generated by collection devices may be in ascending order of 1, 2, 3, ..., so that the server obtains, based on the numbers, visibility information recently reported by a collection device.

Meteorological information is a piece of content optionally included in the visibility information, indicates a weather condition at the observation location, and may be generally one or more of fog, rain, snow, frost, sand and dust, hail, and thunder and lightning.

A detection moment is a piece of content optionally included in the visibility information, indicates an occurrence moment of current detection behavior of the collection device, and may be set to a moment between a start moment at which the collection device performs the current detection and an end moment at which the visibility value is obtained through detection, for example, an intermediate moment between the start moment and the end moment.

A preset reporting periodicity is a piece of content optionally included in the visibility information, and indicates a time interval at which the collection device reports the visibility information generated by two consecutive detections. A time interval between two consecutive reports in the preset reporting periodicity needs to be greater than the time interval between two consecutive detections in the preset detection periodicity, so as to ensure as much as possible that detection is completed and visibility information is generated before the visibility information is reported.

A reporting moment is a piece of content optionally included in the visibility information, indicates an occurrence moment of reporting the visibility information generated by the current detection to the server, and may be generally set to a start moment of reporting the visibility information by the collection device to the server.

It should be noted that the foregoing content is merely an example for describing one or more pieces of content that may be included in the visibility information. In an implementation, the visibility information may further include other content, for example, an identifier of the server and reliability of the collection device that generates the visibility information. This is not listed one by one in this application. In addition, the preset reporting periodicity and the reporting moment are carried in the visibility information, so that the server can determine, in Ineffectiveness manner 1 in Embodiment 1, when a visibility speed limit layer in the user vehicle is ineffective. This is not described again in this application.

Step 502: The server determines, based on the visibility information of the at least one location, a target speed limit road section in a target passing area and a target speed limit value of the target speed limit road section. The target speed limit value of the target speed limit road section is different from a default speed limit value of the target speed limit road section at a first layer.

For example, when the server performs analysis on each target passing area, collection devices in a same target passing area may perform detection behavior according to a same preset detection periodicity, and perform reporting behavior according to a same preset reporting periodicity, to increase a probability that the server obtains, at a same reporting moment, a plurality of pieces of visibility information generated by detecting a same target passing area at a same detection moment, so that the server can accurately and exhaustively generate, with reference to more visibility information generated by detecting the same target passing area at the same detection moment, a visibility speed limit layer corresponding to the target passing area.

In an optional implementation, after receiving a plurality of pieces of visibility information reported by collection devices, the server may first find, based on location information separately carried in the plurality of pieces of visibility information, each piece of visibility information whose observation location is in a same target passing area, and then cluster visibility information whose detection moments are the same or close (for example, an interval between the detection moments is within 1 ms) into a set of visibility information based on a detection moment carried in each piece of visibility information. When a plurality of sets of visibility information (for example, caused by an information transmission delay) corresponding to a same target passing area are obtained through clustering, the server may select, as a target visibility information set corresponding to the target passing area, a set of visibility information whose detection moment is the latest and whose quantity of pieces of visibility information is not less than a preset quantity (for example, 10 pieces), to improve timeliness of navigation. Further, the server may obtain a visibility value carried in each piece of visibility information in the target visibility set corresponding to the target passing area. If all obtained visibility values are not less than a visibility threshold for requiring a dynamic speed limit, it indicates that weather of all road sections in the target passing area is good, and current weather does not affect passing of the user vehicle according to the default speed limit value at the first layer. Therefore, the server may end analysis on the target passing area and analyze another target passing area instead. If one or some visibility values in the obtained visibility values are lower than the visibility threshold for requiring a dynamic speed limit, it indicates that one or more road sections with bad weather exist in the target passing area, the default speed limit value for the one or more road sections at the first layer is no longer applicable to current weather of the one or more road sections, and the server further needs to plan a target speed limit value for the one or more road sections based on the visibility value of the one or more road sections. The visibility threshold for requiring a dynamic speed limit may be set based on a maximum visibility value that is about to affect a driving line of sight of the user vehicle. Generally, a visibility value greater than 200 m does not affect the driving line of sight of the user vehicle, and a visibility value less than 200 m may affect the driving line of sight of the user vehicle. Therefore, the visibility threshold for requiring a dynamic speed limit may be set to 200 m, or set to a value slightly greater than 200 m, for example, 201 m.

In this embodiment of this application, the server may further set a preset correspondence between a visibility range and a speed limit value. The speed limit value may include an upper limit of the speed limit value and/or a lower limit of the speed limit value. The upper limit of the speed limit value indicates a maximum vehicle speed at which the user vehicle is allowed to pass, and the lower limit of the speed limit value indicates a minimum vehicle speed at which the user vehicle is allowed to pass. For example, the speed limit value includes the upper limit of the speed limit value but does not include the lower limit of the speed limit value. Table 1 shows a schematic table of a preset correspondence between a visibility range and a speed limit value as an example.

**Table 1**

| Visibility range identifier | Visibility range (unit: m) | Speed limit value (unit: km/h) |
|---|---|---|
| 1 | [100, 200) | (0, 60] |
| 2 | [50, 100) | (0, 40] |
| 3 | [0, 50) | (0, 20] |

It can be learned from Table 1 that, when the visibility value is not less than 100 m and less than 200 m, the visibility value has specific but small impact on the driving line of sight of the user vehicle. When the vehicle speed of the user vehicle is controlled below 60 km/h, driving safety of the user vehicle can be better ensured. When the visibility value is not less than 50 m and less than 100 m, the visibility value enables the user vehicle to detect only a driving situation of a vehicle within a short distance ahead, and the driving safety of the user vehicle can be effectively ensured only when the vehicle speed of the user vehicle is controlled below 40 km/h. When the visibility value is not less than 0 m and less than 50 m, the visibility value basically cannot enable the user vehicle to detect the driving situation of the vehicle in front of the user vehicle, and the driving safety of the user vehicle can be ensured as much as possible only when the vehicle speed of the user vehicle is controlled below 20 km/h. It can be learned that, provided that the visibility value is less than 200 m, there is a high probability that the visibility value affects the driving safety of the user vehicle on the road section.

According to the correspondence table shown in Table 1, after determining that speed limit planning is to be performed on a target passing area, the server may first cluster, to a same speed limit road section based on location information carried in each piece of visibility information in the target visibility information set corresponding to the target passing area, visibility information whose location information distances are the same or close (close means that a distance is less than or equal to a minimum distance that can be affected by abnormal weather, for example, when heavy fog weather occurs on a location, the heavy fog weather usually also occurs within 2 km of the location, and in this case, close may mean that the location information distance is within 2 km). Theoretically, visibility information in the same speed limit road section is obtained by detecting a same meteorological condition. Therefore, visibility information in the same speed limit road section should carry same or close visibility values (for example, within 20 m of difference). If a difference between a visibility value carried in a piece of visibility information in a speed limit road section and visibility values carried in most other pieces of visibility information in the speed limit road section exceeds 20 m, there is a high probability that the visibility information belongs to abnormal visibility information. The exception may be caused by a fault of the collection device during detection, or may be caused when the visibility information is tampered with by an unauthorized device when the collection device reports the visibility information. In this case, the server may clear the visibility information whose visibility values are clearly abnormal from the speed limit road section, and retain only the visibility information whose visibility values are normal, so as to determine an accurate target speed limit value by using only the normal visibility information.

Further, after only the normal visibility information is left in any speed limit road section, the server may determine, based on visibility values carried in the normal visibility information, target visibility corresponding to the speed limit road section. The target visibility may be a specific visibility value, for example, an average value or a weighted average value of these normal visibility values, or may be a visibility range, for example, a visibility range between a lowest visibility value and a highest visibility value among these normal visibility values, or may be a visibility range identifier (which may be obtained based on the relationship between the visibility range identifier and the visibility range shown in Table 1, and for details, refer to the following content). Then, the server may further compare the target visibility corresponding to the speed limit road section with the three visibility ranges shown in Table 1. When the target visibility meets one of the three visibility ranges, the server determines that the speed limit road section belongs to a speed limit road section on which dynamic speed limit planning needs to be performed. Therefore, the server may determine the speed limit road section as a target speed limit road section, determine a speed limit value corresponding to a met visibility range as the target speed limit value corresponding to the target speed limit road section, and establish an association between the target speed limit road section and the corresponding target speed limit value.

It should be noted that, in the foregoing implementation, only an optional manner of determining the target speed limit road section and the target speed limit value is described in an operation sequence of first cleaning an abnormal detection moment, then combining a same speed limit road section, then cleaning an abnormal visibility value, and finally determining the target speed limit value. In another optional implementation, the server may perform the foregoing operations in another sequence. For example, the server may first combine the same speed limit road section, then clean the abnormal detection moment, then clean the abnormal visibility value, and finally determine the target speed limit value. Alternatively, the server may first clean the abnormal detection moment, then clean the abnormal visibility value, then combine the same speed limit road section, and finally determine the target speed limit value, and the like. This is not listed one by one herein.

For example, when the visibility information further includes a reporting moment, before analyzing the visibility information, the server may further determine a third time difference between a receiving moment at which the visibility information is received and the reporting moment carried in the visibility information. When the third time difference is large (for example, exceeds 2 minutes), it indicates that the visibility information is transmitted between the collection device and the server for very long time. The visibility information received by the server this time is reported by the collection device long time ago, and the abnormal weather at the observation location may have ended long time ago. In this case, the server may no longer use the visibility information to determine the target speed limit road section and the corresponding target speed limit value, so as to reduce unnecessary resource waste in the server. When visibility information with a large third time difference reported by a same collection device appears for a plurality of times, it indicates that a fault occurs in a communication link between the server and the collection device. The server may further generate a third alarm message and push the third alarm message to background operation and maintenance personnel, to promptly rectify the fault of the link between the server and the collection device, and restore real-time reporting of the collection device.

It should be noted that, in another implementation, the visibility range or the visibility value mentioned in step 501 and step 502 may be replaced by a visibility range identifier. Table 2 shows a schematic table of a visibility range identifier as an example.

**Table 2**

| Visibility range identifier | Visibility range (unit: m) |
|---|---|
| 0 | [200, infinity) |
| 1 | [100, 200) |
| 2 | [50, 100) |
| 3 | [0, 50) |

As shown in Table 2, each visibility range identifier can indicate a visibility range, for example, the visibility range identifier 0 indicates a visibility range of not less than 200 m, the visibility range identifier 1 indicates a visibility range of not less than 100 m and less than 200 m, the visibility range identifier 2 indicates a visibility range of not less than 50 m and less than 100 m, and the visibility range identifier 3 indicates a visibility range of not less than 0 m and less than 50 m.

In this implementation, the collection device may store the correspondence shown in Table 2, and the server may store the correspondence between the visibility range identifier and the speed limit value shown in the first column and the third column in Table 1, but does not store the visibility range shown in the second column in Table 1. In this implementation, after collecting the visibility value, the collection device may further first determine which visibility range in Table 2 the visibility value meets, and then carry a visibility range identifier corresponding to the visibility range in the visibility information and report the visibility information to the server, without carrying a specific visibility value in the visibility information. After receiving the visibility information, the server directly compares the visibility range identifier carried in the visibility information with the visibility range identifier in the first column in Table 1, to determine the target speed limit value. In this way, the collection device directly transmits the visibility range identifier to the server, so that the server no longer needs to perform an operation of determining the visibility range, to reduce working pressure of the server.

Step 503: The server generates the visibility speed limit layer based on the target speed limit road section and the target speed limit value of the target speed limit road section.

Step 504: The server sends the visibility speed limit layer to the user vehicle.

In step 503 and step 504, the server may generate the visibility speed limit layer according to a preset generation periodicity, and may deliver the visibility speed limit layer according to a preset delivery periodicity. Any delivered visibility speed limit layer may include an identifier of the target passing area, location information of the target speed limit road section, and the target speed limit value corresponding to the target speed limit road section, and may further include one or more of a number of a visibility speed limit layer, a generation moment, the preset delivery periodicity, a delivery moment, an identifier of the server, a target visibility value corresponding to the target speed limit road section, a detection moment, and meteorological information. For details of other information included at the visibility speed limit layer, refer to Embodiment 2. Details are not described herein again.

Step 505: The user vehicle makes the target speed limit value of the target speed limit road section at the visibility speed limit layer effective, and makes the default speed limit value of the target speed limit road section at the first layer of the map ineffective.

Step 506: The user vehicle determines whether the user vehicle is in the target speed limit road section at the visibility speed limit layer.

If the user vehicle is in the target speed limit road section, step 507 is performed.

If the user vehicle is outside the target speed limit road section, step 508 is performed.

Step 507: The user vehicle determines a current vehicle speed based on the target speed limit value that is of the target speed limit road section and that is indicated at the visibility speed limit layer.

In step 507, when the user vehicle is in the target speed limit road section, it indicates that visibility on a road section on which the user vehicle currently passes is poor, and abnormal weather blocking a line of sight may exist on the current road section. A vehicle speed determined by the user vehicle based on the default speed limit value at the first layer is no longer applicable to the abnormal weather. In this case, the vehicle speed of the user vehicle is replanned by preferably using the target speed limit value determined based on a visibility value of the current road section, so that the current vehicle speed of the user vehicle meets the current abnormal weather, to help improve the driving safety of the user vehicle.

It should be understood that, when the visibility speed limit layer includes a plurality of target speed limit road sections, the user vehicle may further find, based on a location of the user vehicle, a target speed limit road section on which the user vehicle is located, and select a vehicle speed that is not higher than a target speed limit value of the target speed limit road section to pass through the location.

Step 508: The user vehicle determines a current vehicle speed based on a default speed limit value that is of a current road section and that is indicated at the first layer of the map.

In step 508, when the user vehicle is outside the target speed limit road section, it indicates that visibility on a road section on which the user vehicle currently passes is good, and abnormal weather blocking a line of sight does not exist on the current road section. The vehicle speed determined by the user vehicle based on the default speed limit value at the first layer is still applicable to current weather. In this case, the user vehicle may continue to pass at a previously determined vehicle speed, so as to ensure high-speed passing of the user vehicle in a good weather situation, and improve driving efficiency and driving stability.

For example, after receiving the visibility speed limit layer, the user vehicle may further perform step 509.

Step 509: The user vehicle makes, after a period of time, the target speed limit value of the target speed limit road section at the visibility speed limit layer ineffective, and makes the default speed limit value of the target speed limit road section at the first layer of the map effective.

In the foregoing visibility speed limit scenario, the visibility speed limit layer including the target speed limit value is generate by using the visibility information, instead of directly adding the visibility information to the first layer, so that the user vehicle can directly use one of the target speed limit value indicated at the visibility speed limit layer and the default speed limit value indicated at the first layer to actively complete vehicle speed switching on the current road section, and a vehicle owner does not need to independently decide a speed limit value based on a current weather condition. This helps to make the navigation method compatible with an autonomous driving system, implements consistency of passing of each user vehicle, and can ensure as much as possible that the user vehicle passes at a vehicle speed that meets the current weather condition, to improve the driving safety.

### Scenario 2: Sign speed limit scenario

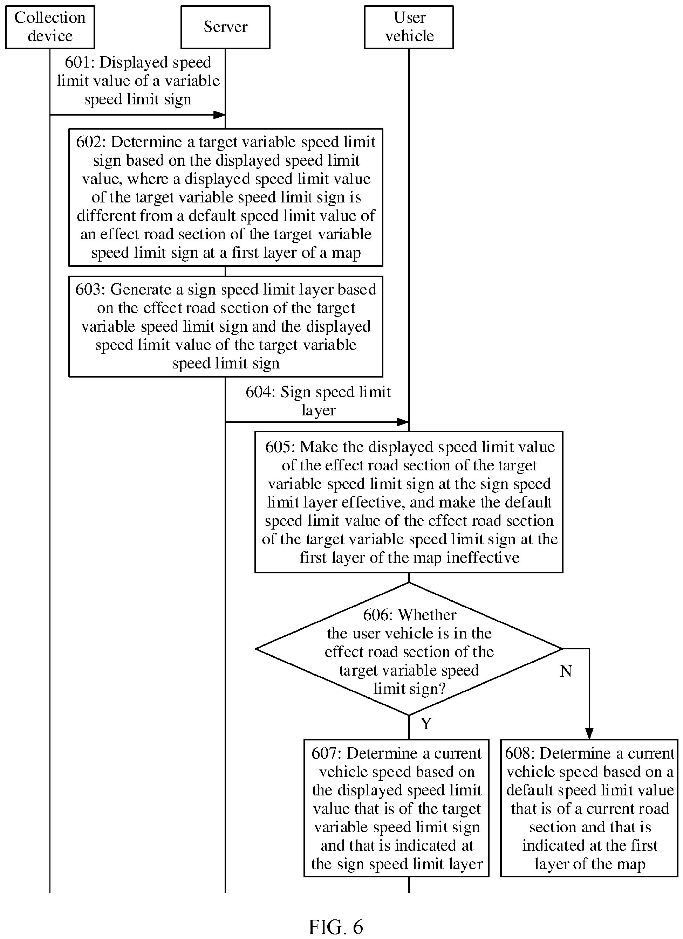

FIG. 6 is an example of a schematic application flowchart of Embodiment 2 in a sign speed limit scenario. The method is applicable to a collection device, a server, and a vehicle, for example, one or more collection devices 110, the server 120, and the user vehicle 130 shown in FIG. 1. In this example, the collection device may be any device that can sense a displayed speed limit value on a sign, for example, may include the third-party server 111. The sign may be specifically a sign whose speed limit value may change, for example, a variable speed limit sign. The following uses a variable speed limit sign as an example for description. For another sign that can change a speed limit value, the following solution may also be directly used. As shown in FIG. 6, the method includes the following steps.

Step 601: A collection device reports a displayed speed limit value of a variable speed limit sign to a server.

It should be noted that the variable speed limit sign is usually disposed at an entrance of a lane, and is a public facility with a display screen. The display screen displays a speed limit value (referred to as the displayed speed limit value) on a front road section of the lane. When driving on the lane to the front road section, a user vehicle needs to pass at a vehicle speed not higher than the displayed speed limit value of the variable speed limit sign. Generally, variable speed limit signs disposed on all lanes in the country are coupled to the Ministry of Transport. When some events requiring changing speed limit values on road sections occur (for example, temporary speed limits are set in accident-prone areas or road construction sites, and speed limits need to be reduced on some road sections during special festivals), the Ministry of Transport changes an original displayed speed limit value or temporarily adds a displayed speed limit value on a variable speed limit sign corresponding to each of these road sections. After these events disappear, the Ministry of Transport restores the original displayed speed limit value on the variable speed limit sign or deletes the temporarily added displayed speed limit value. Based on this, the collection device may be preferably set to the Ministry of Transport. After performing an update each time, the Ministry of Transport may generate sign speed limit information based on one or more variable speed limit signs updated this time and a new displayed speed limit value on each updated variable speed limit sign, and report the sign speed limit information to the server in real time.

In other cases, when passing through the variable speed limit sign, a crowd-sourcing vehicle may also actively obtain the displayed speed limit value on the variable speed limit sign by taking photos or the like, and when the obtained displayed speed limit value is different from a default speed limit value of the variable speed limit sign corresponding to a first layer, generate sign speed limit information based on the variable speed limit sign and the obtained displayed speed limit value, and report the sign speed limit information to the server. Alternatively, when a road side unit is disposed near the variable speed limit sign and has a function of collecting the displayed speed limit value of the variable speed limit sign, the road side unit may detect the displayed speed limit value on the nearby variable speed limit sign according to a preset detection periodicity, and once finding that a detected displayed speed limit value is different from the displayed speed limit value of the variable speed limit sign corresponding to the first layer, generate the sign speed limit information based on the variable speed limit sign and the detected displayed speed limit value, and report the sign speed limit information to the server. It should be understood that, in another optional implementation, the crowd-sourcing vehicle or the road side unit may directly generate the sign speed limit information after obtaining the displayed speed limit value, and send the sign speed limit information to the server, without comparing the sign speed limit information with a displayed speed limit value in a map.

In this embodiment of this application, sign speed limit information reported by the collection device at any time may include an identifier of the variable speed limit sign and the displayed speed limit value of the variable speed limit sign, and may further include one or more of a number of the sign speed limit information, an identifier of the collection device, a reporting moment, a speed limit update reason, an identifier of the server, and reliability of the collection device. The identifier of the variable speed limit sign may be a name of the variable speed limit sign, a location of the variable speed limit sign, an effect road section of the variable speed limit sign, or other information that can identify the variable speed limit sign, for example, may be defined by a name of a road on which the variable speed limit sign is located, a name of a road section, and numbers of all variable speed limit signs set on the road section. The location of the variable speed limit sign or the effect road section of the variable speed limit sign may be presented by using a coordinate location of the variable speed limit sign in a real world, or may be presented by using a road section location of the variable speed limit sign at the first layer. This is not specifically limited. In addition, the speed limit update reason indicates a reason why the displayed speed limit value of the variable speed limit sign changes, and may generally be one of a traffic accident, road construction, or a special festival. For details of other information included in the sign speed limit information, refer to step 401 in the foregoing visibility speed limit scenario. Details are not described herein again.

Step 602: The server determines a target variable speed limit sign in a target passing area based on a displayed speed limit value of each variable speed limit sign, where a displayed speed limit value of the target variable speed limit sign is different from a default speed limit value of an effect road section of the target variable speed limit sign at the first layer of the map.

In an optional implementation, before determining the target variable speed limit sign, the server may further first perform data cleaning on each received sign speed limit information, which specifically includes: If sign speed limit information is generated by the collection device for a variable speed limit sign whose displayed speed limit value changes, the server may directly retain the sign speed limit information. If sign speed limit information is generated by the collection device for any variable speed limit sign (including a variable speed limit sign whose displayed speed limit value does not change), the server may compare the displayed speed limit value of each variable speed limit sign included in the sign speed limit information with a default speed limit value of an effect road section of the variable speed limit sign at the first layer (where the first layer stores a default speed limit value of each road section, and a default speed limit value of any road section is usually specified by a fixed sign set on the road section). When a displayed speed limit value of a variable speed limit sign is consistent with the default speed limit value of the effect road section of the variable speed limit sign at the first layer, it indicates that a speed limit indicated by the variable speed limit sign is the same as a default speed limit on a current road section, and the speed limit on the current road section does not change. The server may delete information related to the variable speed limit sign included in the sign speed limit information. When a displayed speed limit value of a variable speed limit sign is inconsistent with the default speed limit value of the effect road section of the variable speed limit sign at the first layer, it indicates that a speed limit value on a current road section changes. The server may retain information related to the variable speed limit sign included in the sign speed limit information.

Further, the server may obtain identifiers of a plurality of remaining variable speed limit signs from the sign speed limit information obtained after data cleaning, determine, based on the identifiers of the plurality of remaining variable speed limit signs, effect road sections respectively corresponding to the plurality of remaining variable speed limit signs, and then use, as the variable speed limit sign corresponding to the target passing area, at least one variable speed limit sign whose effect road section is located in a same target passing area. There may be a plurality of manners in which the server determines the effect road section based on the identifier of the variable speed limit sign. For example, in one manner, the server may store a correspondence between the identifier of the variable speed limit sign and the effect road section, and the server can directly query the correspondence to determine the effect road section corresponding to the identifier of the variable speed limit sign. For another example, in another manner, the collection device may directly use the effect road section of the variable speed limit sign as the identifier of the variable speed limit sign. In this way, the identifier of the variable speed limit sign that is obtained by parsing the sign speed limit information by the server is the effect road section of the variable speed limit sign.

Then, the server may determine, as a target variable speed limit sign in the target passing area, a variable speed limit sign with a same or close effect road section in the variable speed limit sign corresponding to any target passing area. When a target variable speed limit sign is obtained by combining a plurality of variable speed limit signs with same or close effect road sections, if a plurality of displayed speed limit values of the plurality of variable speed limit signs have a small difference, the server may directly determine the target speed limit value based on the plurality of displayed speed limit values, for example, randomly select one of the plurality of displayed speed limit values as the target speed limit value, or use an average value or a weighted average value of the plurality of displayed speed limit values as the target speed limit value. If one of the plurality of displayed speed limit values of the plurality of variable speed limit signs is clearly different from other displayed speed limit values, there is a high probability that the displayed speed limit value is an abnormal displayed speed limit value. The server may determine, based on the other displayed speed limit values instead of the abnormal displayed speed limit value, the target speed limit value corresponding to the target variable speed limit sign, for example, randomly select one of the other displayed speed limit values as the target speed limit value, or use an average value or a weighted average value of the other displayed speed limit values as the target speed limit value. In addition, the server may further record an exception quantity of times that a displayed speed limit value is sent by each collection device. When determining that a collection device sends an abnormal displayed speed limit value for a plurality of times, the server may further generate a fourth alarm message, and push the fourth alarm message to background operation and maintenance personnel, to promptly rectify the abnormal collection device.

Step 603: The server generates a sign speed limit layer based on the effect road section of the target variable speed limit sign and the displayed speed limit value of the target variable speed limit sign.

Step 604: The server sends the sign speed limit layer to the user vehicle.

In step 603 and step 604, when the server generates, according to a preset generation periodicity, the sign speed limit layer corresponding to the target passing area, and delivers, according to a preset delivery periodicity, the sign speed limit layer corresponding to the target passing area, in addition to the effect road section of the target variable speed limit sign and the displayed speed limit value of the target variable speed limit sign that exist in the target passing area, any delivered sign speed limit layer may further include one or more of a number of the sign speed limit layer, the preset generation periodicity, a generation moment, a preset delivery periodicity, a delivery moment, a speed limit change reason, or an identifier of the server. For details of other content at the sign speed limit layer, refer to Embodiment 2. Details are not described herein again.

Step 605: The user vehicle makes the displayed speed limit value of the effect road section of the target variable speed limit sign at the sign speed limit layer effective, and makes the default speed limit value of the effect road section of the target variable speed limit sign at the first layer of the map ineffective.

Step 606: The user vehicle determines whether the user vehicle is in the effect road section of the target variable speed limit sign at the sign speed limit layer.

If the user vehicle is in the effect road section of the target variable speed limit sign, step 607 is performed.

If the user vehicle is outside the effect road section of the target variable speed limit sign, step 608 is performed.

Step 607: The user vehicle determines a current vehicle speed based on the displayed speed limit value that is of the target variable speed limit sign and that is indicated at the sign speed limit layer.

In step 607, when the user vehicle is in an effect road section of a target variable speed limit sign, it indicates that a speed limit value of a road section on which the user vehicle is currently located changes. A vehicle speed determined by the user vehicle based on the default speed limit value at the first layer may no longer meet the displayed speed limit value indicated by the target variable speed limit sign on the current road section. In this case, the speed limit value displayed on the target variable speed limit sign is preferably used, so that the user vehicle can automatically switch to a new vehicle speed that meets a speed limit requirement of the variable speed limit sign of the current road section, to reduce a traffic violation possibility. Further, the variable speed limit sign is usually disposed at a road section entrance location, and the sign speed limit layer is delivered in real time by using the server. Even if the speed limit value displayed on the variable speed limit sign changes after the user vehicle has entered the effect road section of the variable speed limit sign, the user vehicle can also learn, in real time based on the sign speed limit layer, a changed displayed speed limit value on the passed variable speed limit sign, so that the user vehicle can switch in time to a vehicle speed that does not exceed the speed limit specified on the current road section to complete passing.

Step 608: The user vehicle determines a current vehicle speed based on a default speed limit value that is of a current road section and that is indicated at the first layer of the map.

In step 608, when the user vehicle is outside the effect road section of the target variable speed limit sign, it indicates that a speed limit value of a road section on which the user vehicle is currently located does not change, and the user vehicle may continue to smoothly pass through the current road section at a vehicle speed indicated by the default speed limit value at the first layer.

In the sign speed limit scenario, the sign speed limit layer is generated in real time by using the displayed speed limit value of the variable speed limit sign with a speed limit change and delivered to the user vehicle, so that the user vehicle can directly and automatically switch a vehicle speed based on one of the speed limit indicated at the sign speed limit layer and the speed limit indicated at the first layer. In this manner, a vehicle owner does not need to be distracted to check a real variable speed limit sign disposed at an entrance of a road section before entering the road section, and the user vehicle that has driven into an effect road section of a variable speed limit sign can learn a speed limit change situation on the current road section in time. This can effectively improve a capability of the user vehicle to adjust the vehicle speed in time based on the variable speed limit sign with a speed limit change, and reduce the traffic violation possibility. Further, the Ministry of Transport is coupled to the server, so that the server can obtain, through an interaction with the Ministry of Transport, displayed speed limit values of all variable speed limit signs whose speed limit changes at a current moment, to effectively reduce a communication loss in a navigation process.

It should be noted that, in both the foregoing visibility speed limit scenario and the foregoing sign speed limit scenario, a vehicle speed of the user vehicle is actually limited. If the user vehicle is located only on one of the target speed limit road section at the visibility speed limit layer and an effect road section of a target variable speed limit sign at the sign speed limit layer, the user vehicle may determine the vehicle speed of the user vehicle only based on the layer at which the user vehicle is located. However, if the user vehicle is located on both the target speed limit road section at the visibility speed limit layer and an effect road section of a target variable speed limit sign at the sign speed limit layer, the user vehicle needs to determine the vehicle speed of the user vehicle based on the two layers. For example, the user vehicle may first determine, based on a location and the visibility speed limit layer, a first target speed limit value defined by a visibility value in a current environment, then determine, based on the location and the sign speed limit layer, a second target speed limit value defined by the target variable speed limit sign, then determine an intersection speed limit value of the first target speed limit value and the second target speed limit value, and select a vehicle speed within the intersection speed limit value to pass through the location. This manner enables the user vehicle to set a current vehicle speed with reference to a current worst dynamic environment as much as possible, and helps maximize driving safety of the user vehicle.

### Scenario 3: Traffic incident scenario

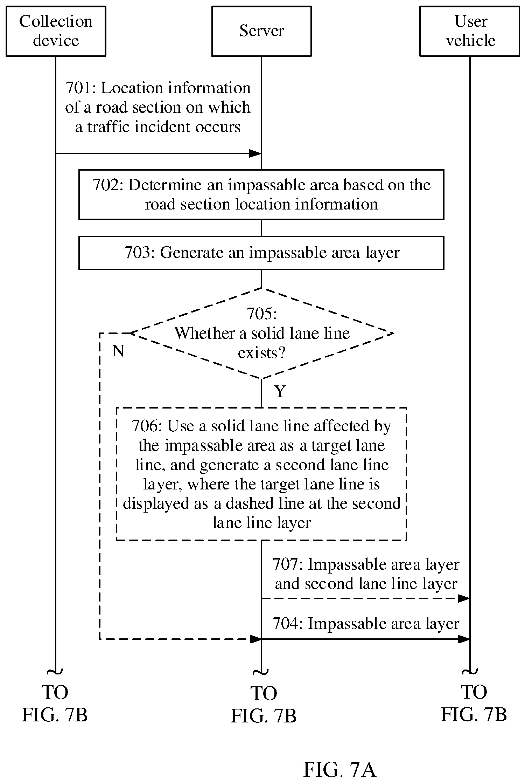

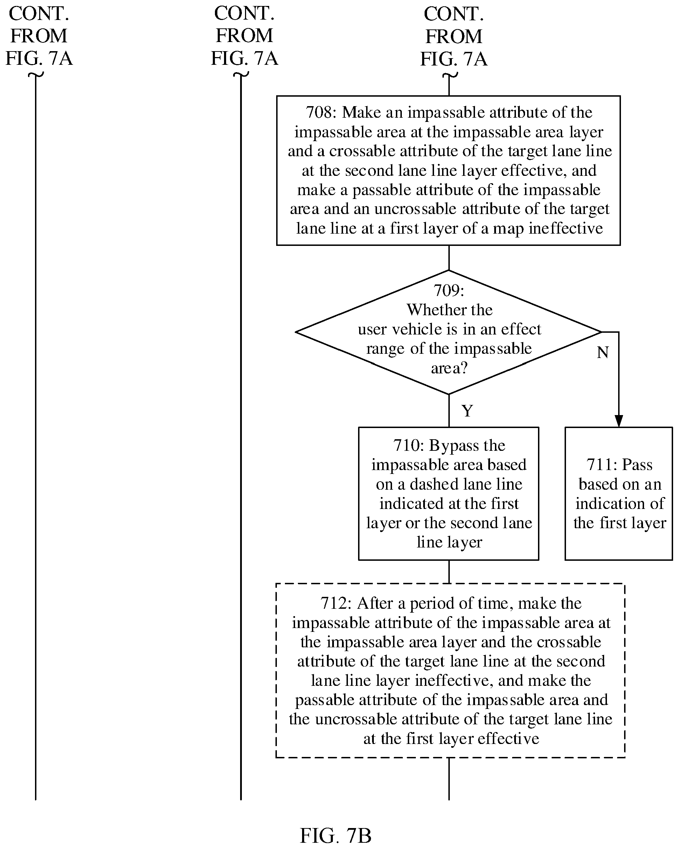

FIG. 7A and FIG. 7B are an example of a schematic application flowchart of Embodiment 2 in a traffic incident scenario. The method is applicable to a collection device, a server, and a vehicle, for example, one or more collection devices 110, the server 120, and the user vehicle 130 shown in FIG. 1. In this example, the collection device may be any device that can sense a traffic incident that occurs on a current road section, for example, may include both the road side unit 112 and the crowd-sourcing vehicle 113. As shown in FIG. 7A and FIG. 7B, the method includes the following steps.

Step 701: A collection device sends, to a server, location information of a road section on which a traffic incident occurs.

In step 701, a crowd-sourcing vehicle may generate corresponding traffic incident information in real time and report the corresponding traffic incident information to the server when passing through a traffic incident occurrence area, and a road side unit may monitor a fixed road section according to a fixed monitoring periodicity, generates corresponding traffic incident information and report the corresponding traffic incident information to the server in a monitoring periodicity in which a traffic incident occurs, and does not need to generate corresponding traffic incident information and report the corresponding traffic incident information to the server in a monitoring periodicity in which no traffic incident occurs. Traffic incident information reported by any collection device may include location information of a road section on which the traffic incident occurs, and may further include one or more of a number of the traffic incident information, a traffic incident type, an identifier of the collection device, a preset reporting periodicity, a reporting moment, an identifier of the server, or reliability of the collection device. The location information of the road section on which the traffic incident occurs may be presented by using coordinates of an accident center point and a radiation range, or may be presented by using a coordinate set, or may be presented by using a road section location in a map. This is not specifically limited. For details of other content included in the traffic incident information, refer to the foregoing visibility speed limit scenario. Details are not described herein again.

Step 702: The server determines an impassable area in a target passing area based on the location information of the road section on which the traffic incident occurs.

In step 702, when the server performs analysis on each target passing area, after receiving a plurality of pieces of traffic incident information reported by each collection device, the server may find, based on road section location information that is of each road section on which a traffic incident occurs and that is included in the plurality of pieces of traffic incident information, each piece of target traffic incident information whose road section location information is located in a same target passing area, and then integrate, by using road section location information carried in each piece of target traffic incident information in the target passing area as a center, road section location information carried in another target traffic incident that is the same as or close to the road section location information, to obtain an impassable area in the target passing area. For example, if traffic incident information reported by a collection device 1 indicates that a traffic incident occurs on a road section B₁ that is 20 m to 25 m away from a start location and that is on a road section B, traffic incident information reported by a collection device 2 indicates that a traffic incident occurs on a road section B₂ that is 26 m to 28 m away from the start location and that is on the road section B, and traffic incident information reported by a collection device 3 indicates that a traffic incident occurs on a road section B₃ that is 100 m to 150 m away from the start location and that is on the road section B, the road section B₁ on which the traffic incident occurs and the road section Bz on which the traffic incident occurs are close road sections with a small distance, and the two road sections may be caused by a serial traffic accident. In this case, the server may integrate the road section B₁ and the road section B₂ to obtain an impassable area 1. The impassable area 1 includes a road section range of 20 m to 28 m away from the start location on the road section B. The road section B₃ on which the traffic incident occurs is far away from both the road section B₁ on which the traffic incident occurs and the road section Bz on which the traffic incident occurs, and is clearly a separate incident area. Therefore, the server may directly use the road section B₃ on which the traffic incident occurs as an impassable area 2. The impassable area 2 includes a road section range of 100 m to 150 m away from the start location on the road section B.

Step 703: The server generates an impassable area layer based on the impassable area in the target passing area. An impassable attribute of the impassable area at the impassable area layer is different from a passable attribute of an impassable area at a first layer of a map.

Step 704: The server sends the impassable area layer to a user vehicle.

In step 703 and step 704, when the server generates, according to a preset generation periodicity, the impassable area layer corresponding to the target passing area, and delivers, according to a preset delivery periodicity, the impassable area layer corresponding to the target passing area, any delivered impassable area layer includes location information of one or more impassable areas in the target passing area, and may further include one or more of a number of the impassable area layer, a generation moment, the preset delivery periodicity, a delivery moment, a traffic incident type, or an identifier of the server. Location information of each impassable area may be presented by using coordinates of an area center point and a radiation range, or may be presented by using a coordinate set, or may be presented by using a road section location in the map. This is not specifically limited. For details of other content at the impassable area layer, refer to Embodiment 2. Details are not described herein again.

In this embodiment of this application, when it is indicated that a lane change cannot be performed in the impassable area on a real road, the user vehicle actually can only stop and wait when reaching the impassable area, until the traffic incident ends. However, in some emergency traffic incidents, the user vehicle may not have enough time to stop. For example, a throw suddenly appears in front of the user vehicle during a high-speed driving process, and if the user vehicle does not avoid the throw, a traffic accident may be caused by hitting the throw. When such an emergency occurs, the user vehicle should implement an emergency lane change measure, without being stuck by the rule that a lane change cannot be performed on the real road. However, the first layer is only a mapping of the real road. It is specified at the first layer that a lane change cannot be performed on the road, and the user vehicle cannot implement an emergency lane change based on the first layer when an emergency occurs. Based on this, in an optional implementation, after determining the impassable area, if determining that a current traffic incident is very urgent, the server may further perform the following step 705 to step 707.

Step 705: The server determines whether a solid lane line exists in all lane lines affected by the impassable area.

If no solid lane line exists in all lane lines, step 704 is performed.

If a solid lane line exists in all lane lines, step 706 is performed.

In step 705, the first layer may include a first lane layer and a first lane line layer. After determining the impassable area, the server may first associate the impassable area with the first lane layer in the map, to obtain all lanes affected by the impassable area, and then find lane lines on both sides of each affected lane from the first lane line layer in the map (where only one lane line can be found when the lane is on the edge, and two lane lines can be found when the lane is in the middle) and a dashed line or solid line attribute of the lane line displayed at the first lane line layer. When all the found lane lines are dashed lane lines, it indicates that the first lane line layer supports a lane change when the user vehicle travels to a lane affected by the impassable area, and the user vehicle can implement a lane change function in an emergency with reference to the first lane line layer. In this case, the server may deliver the impassable area layer to the user vehicle without delivering a second lane line layer, to implement a function of reminding the user vehicle to avoid the impassable area while reducing communication consumption.

Step 706: The server uses the solid lane line affected by the impassable area as a target lane line, and generates the second lane line layer based on the target lane line, where the target lane line is displayed as a dashed line at the second lane line layer.

In step 706, if a solid lane line exists in all lane lines affected by the impassable area, it indicates that a lane separated from an adjacent lane by using a solid lane line may exist in all lanes affected by the impassable area. The lane on the real road does not support a lane change operation of the user vehicle. As a result, the user vehicle cannot perform an emergency lane change operation in an emergency. In this case, the server may use these solid lane lines as target lane lines, generate the second lane line layer based on these solid lane lines, and assign a dashed line attribute to these solid lane lines at the second lane line layer. It means that when the user vehicle performs autonomous driving with reference to the second lane line layer, the lane lines that are solid lines in a real environment but are dashed lines at the second lane line layer allow the user vehicle to cross, and the user vehicle can automatically perform a lane change on these solid lane lines to safe road sections in an emergency traffic incident.

In this embodiment of this application, that the server generates the second lane line layer based on the affected solid lane line may be:

The server generates the second lane line layer based on only the solid lane line to which the dashed line attribute is assigned, so that in an emergency, the user vehicle is concentrated on a few lane lines to perform a lane change, to facilitate unified control on the user vehicle.

Alternatively,
the server generates the second lane line layer based on both the solid lane line to which the dashed line attribute is assigned and the dashed lane line that already has the dashed line attribute, to provide more crossable options for the user vehicle, and reduce an occurrence possibility of a lane change accident in an emergency.

It should be noted that in step 705 and step 706, once determining that a solid lane line exists in the lane lines affected by the impassable area, the server assigns a crossable attribute to the solid lane line, without considering whether a dashed lane line exists in the lane lines affected by the impassable area. This is only an optional implementation. In another optional implementation, for any lane affected by the impassable area, the server may first determine, based on the first lane line layer of the map, whether a dashed lane line exists in lane lines on both sides of the lane. When the dashed lane line exists, it indicates that the user vehicle traveling on the lane can cross the lane under effect of the first lane line layer. Therefore, the server may not additionally assign a crossable attribute to the solid lane line on the lane. When the dashed lane line does not exist, it indicates that both sides of the lane are solid lane lines, and the user vehicle traveling on the lane cannot cross the lane under the effect of the first lane line layer. In this case, the server may further assign a crossable attribute to one or two solid lane lines on both sides of the lane, so that the user vehicle traveling on the lane can perform a lane change based on an indication of the second lane line layer.

Step 707: The server sends the impassable area layer and the second lane line layer to the user vehicle.

In step 707, the server may synchronously deliver the impassable area layer and the second lane line layer according to a same preset delivery periodicity, or may separately deliver the impassable area layer and the second lane line layer according to a same preset delivery periodicity but at a staggered time interval, or may separately deliver the impassable area layer and the second lane line layer according to different preset delivery periodicities. This is not specifically limited.

In this embodiment of this application, any second lane line layer delivered by the server may include an identifier of the target lane line and a crossable attribute of the target lane line. The identifier of the target lane line may be one or more of a name of the target lane line (for example, a string group obtained by naming the target lane line according to a fixed string naming rule), a location of the target lane line (generally defined by an effect road section of the target lane line and a number of the target lane line on the effect road section, for example, lane line No. 1 of the loop road in * * District ** City), or other information that can identify the target lane line. The crossable attribute of the target lane line may be presented by using a dashed line. For example, any second lane line layer may further include one or more of a number of the second lane line layer, a preset delivery periodicity corresponding to the second lane line layer, a delivery moment, a set of lanes affected by the impassable area, a set of lane lines affected by the impassable area, and the identifier of the server. The set of lanes affected by the impassable area may include identifiers of all or some lanes affected by the impassable area, and the set of lane lines affected by the impassable area may include identifiers of all or some lane lines affected by the impassable area. This is not specifically limited. For details of other information included at the second lane line layer, refer to Embodiment 2. Details are not described herein again.

In an optional implementation, both an impassable area layer and a second lane line layer that are corresponding to a same target passing area may include a set of lanes affected by the impassable area or a set of lane lines affected by the impassable area. In this way, even if the user vehicle separately receives, at different moments, the impassable area layer and the second lane line layer that are corresponding to the same target passing area, the user vehicle may associate the two layers based on a same lane set or a same lane line set, to accurately complete a lane change avoidance operation of the user vehicle in the target passing area.

For example, when the impassable area layer or the second lane line layer includes the set of lanes affected by the impassable area or the set of lane lines affected by the impassable area, after receiving the impassable area layer or the second lane line layer, the user vehicle may further mark, based on the lane set or the lane line set, the lane or lane line affected by the impassable area in the map, so that a vehicle owner can learn a current traffic situation in time and prepare for crossing a line.

Step 708: The user vehicle makes the impassable attribute of the impassable area at the impassable area layer and the crossable attribute of the target lane line at the second lane line layer effective, and makes the passable attribute of the impassable area and an uncrossable attribute of the target lane line at the first layer of the map ineffective.

Step 709: The user vehicle determines whether the user vehicle is in an effect range of the impassable area indicated at the impassable area layer.

If the user vehicle is in the effect range of the impassable area, step 710 is performed.

If the user vehicle is outside the effect range of the impassable area, step 711 is performed.

Step 710: The user vehicle bypasses the impassable area based on the dashed lane line indicated at the first layer or the second lane line layer.

In step 709 and step 710, when the user vehicle finds that the user vehicle is about to reach the impassable area caused by the emergency traffic incident, the user vehicle may determine that the user vehicle is in the effect range of the impassable area. In this case, if the user vehicle receives only the impassable area layer delivered by the server, it indicates that all lane lines affected by the impassable area are displayed as dashed lines at the first lane line layer, and these lane lines have a crossable attribute. The user vehicle may directly perform a lane change to a safe lane with reference to the dashed lane line indicated at the first lane line layer. If the user vehicle receives both the impassable area layer and the second lane line layer that are delivered by the server, it indicates that some or all of the lane lines affected by the impassable area are displayed as solid lines at the first lane line layer. These lane lines may restrict the user vehicle on some lanes from performing a lane change. Therefore, to implement an emergency lane change capability of the user vehicle in an emergency, the user vehicle may directly perform a lane change with reference to the dashed lane line indicated at the second lane line layer, without being stuck by the solid lane line at the first lane line layer. Alternatively, the user vehicle may perform a lane change with reference to both the dashed lane line indicated at the first lane line layer and the dashed lane line indicated at the second lane line, to reduce a probability that a plurality of user vehicles select a same lane line for performing a change lane, and improve safety of avoiding the impassable area.

Step 711: The user vehicle passes in a passing mode indicated at the first layer.

In step 711, when the user vehicle is located outside the effect range of the impassable area, it indicates that next passing of the user vehicle is not affected by the impassable area, and the user vehicle does not need to additionally perform an operation of bypassing the impassable area, but may continue to pass with reference to an indication of the first layer.

For example, after receiving the impassable area layer and the second lane line layer, the user vehicle may further perform step 712.

Step 712: The user vehicle makes, after a period of time, the impassable attribute of the impassable area at the impassable area layer and the crossable attribute of the target lane line at the second lane line layer ineffective, and makes the passable attribute of the impassable area and the uncrossable attribute of the target lane line at the first layer of the map effective.

In the foregoing traffic incident scenario, the impassable area layer is generated by using the traffic incident information, instead of directly adding the traffic incident information to the first layer, so that the user vehicle can directly avoid, in advance based on an indication of the impassable area layer, an obstacle that appears in the front. Further, the second lane line layer is generated to assign the crossable attribute to the solid lane line affected by the impassable area, so that the user vehicle can implement an emergency lane change based on an indication of the second lane line layer in an emergency, without being stuck by the solid lane line in the real road or at the first layer. This helps the user vehicle safely bypass the impassable area and reduces an occurrence probability of a traffic accident.

It should be noted that, in the foregoing traffic incident scenario, a specific implementation of the navigation method is described only by using an example in which a line type represents an attribute of whether the lane line is crossable. In other cases, the attribute of whether the lane line is crossable may also be represented by a color, for example, a red lane line is uncrossable, and a green lane line is crossable. For a navigation method in other cases, directly refer to the foregoing traffic incident scenario. This is not listed one by one in this application.

It should be noted that, a main idea of Embodiment 2 is: generating, by using the environment information, the second layer including the second passing mode, so that the user vehicle can directly and actively switch the passing mode according to either the second passing mode at the second layer or the first passing mode at the first layer. On the basis of the main idea, a specific implementation of Embodiment 2 may be further modified to obtain a new embodiment. The following describes several possible modification solutions as examples.

In a modification solution 1 of Embodiment 2, in a scenario in which the user vehicle has a strong computing capability, the collection device may alternatively directly report the environment information to the user vehicle, or forward the environment information to the user vehicle by using the server, and the user vehicle performs an operation of the server in Embodiment 2 to obtain the second layer. The collection device may include only the user vehicle, so that the user vehicle can self-plan a passing mode in real time based on environment information collected during driving of the user vehicle.

In a modification solution 2 of Embodiment 2, the server receives the environment information reported by the collection device, determines, based on the environment information, the second passing mode used for the target passing area, and sends the second passing mode to the user vehicle. The user vehicle generates the second layer based on the second passing mode used for the target passing area, and completes passing with reference to the second passing mode at the second layer and the first passing mode used for the target passing area at the first layer in the map. The modification solution combines the user vehicle and the server to complete an operation of constructing the entire second layer, and can disperse the working pressure of the server.

In a modification solution 3 of Embodiment 2, when the server cannot directly communicate with the user vehicle, the server may further generate the second layer corresponding to any target passing area and deliver the second layer to the collection device, for example, the road side unit, in the target passing area. After establishing a connection to any user vehicle that passes through a current road, the road side unit transfers, to the user vehicle, the second layer corresponding to the target passing area, so that the user vehicle completes passing with reference to the second passing mode at the second layer corresponding to the target passing area and the first passing mode at the first layer.

In a modification solution 4 of Embodiment 2, one central collection device is disposed in an area corresponding to each target passing area, and the central collection device is separately coupled to all collection devices disposed in the area corresponding to the target passing area and the user vehicle traveling in the target passing area. In an implementation, all collection devices disposed in an area corresponding to any target passing area report environment information to a central collection device disposed in the area corresponding to the target passing area. The central collection device determines, based on the environment information, the second passing mode used for the target passing area, further generates the second layer corresponding to the target passing area, and delivers the second layer to the user vehicle traveling in the target passing area. The user vehicle completes passing with reference to the second passing mode at the second layer corresponding to the target passing area and the first passing mode at the first layer.

There are many modification solutions of Embodiment 2, which are not described one by one in this application.

### Embodiment 3

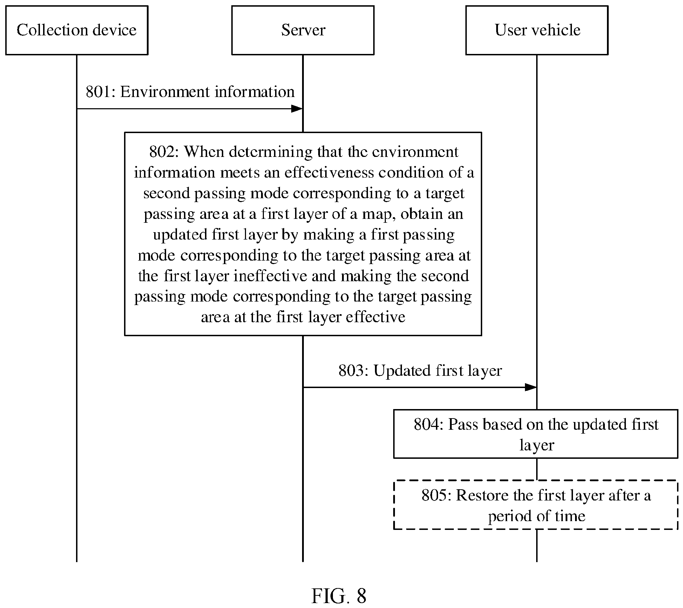

FIG. 8 is an example of a schematic flowchart corresponding to a navigation method according to Embodiment 3 of this application. The method is applicable to a collection device, a server, and a user vehicle, for example, one or more collection devices 110, the server 120, and the user vehicle 130 shown in FIG. 1. As shown in FIG. 8, the method includes the following steps.

Step 801: A collection device sends environment information to a server.

In step 801, the environment information may include location information, and may further include a dynamic environment value. For example, environment information in a visibility speed limit scenario includes a visibility value at an observation location, and environment information in a sign speed limit scenario includes a displayed speed limit value of a variable speed limit sign. Therefore, the environment information in the two scenarios includes both the location information and the dynamic environment value. For another example, environment information in a traffic incident scenario includes location information of a road section on which a traffic incident occurs, and the environment information in the scenario includes the location information but does not include the dynamic environment value. For details of related content of the environment information, refer to Embodiment 2. Details are not described herein again.

Step 802: When determining that the environment information meets an effectiveness condition of a second passing mode corresponding to a target passing area at a first layer of a map, the server obtains an updated first layer by making a first passing mode corresponding to the target passing area at the first layer ineffective and making the second passing mode corresponding to the target passing area at the first layer effective.

In an optional implementation, after receiving a plurality of pieces of environment information reported by each collection device, the server may find, from the plurality of pieces of environment information, at least one piece of environment information located in a same target passing area, then perform clustering on same or close location information based on location information included in the at least one piece of environment information, use each passing area obtained through aggregation as a sub-area in the target passing area, and generate, based on environment information of each sub-area in the target passing area, environment indication information corresponding to the target passing area. The sub-area may be an area of any type obtained through clustering based on the environment information, for example, may be an area in which a passing mode triggered by the environment information is different from the first passing mode at the first layer, or may be an area in which a passing mode indicated by the environment information is the same as the first passing mode at the first layer. This is not specifically limited.

For example, the server may generate, according to a preset generation periodicity, the environment indication information corresponding to the target passing area. Any generated environment indication information may include location information of the target passing area, and may further include location information of each sub-area, and one or more of a dynamic environment value corresponding to each sub-area, a number of the environment indication information, a dynamic environment identifier, the preset generation periodicity, or a generation moment. For details of content of the environment indication information, refer to Embodiment 2. Details are not described herein again.

In a specific implementation, after determining the environment indication information corresponding to the target passing area, a cloud server may first obtain the location information of the target passing area from the environment indication information corresponding to the target passing area, and then associate the location information with an application scope of each update rule preset in the map, to find a target update rule applicable to the target passing area, and then compare the environment indication information corresponding to the target passing area with an effectiveness condition of each second passing mode included in the target update rule. If the environment indication information meets an effectiveness condition of a second passing mode, the cloud server makes the first passing mode at the first layer of the map ineffective, and makes the second passing mode at the first layer of the map effective, to obtain the updated first layer. If the environment indication information does not meet effectiveness conditions of all second passing modes, no processing is performed.

Step 803: The server sends the updated first layer to a user vehicle.

Step 804: The user vehicle passes based on the updated first layer.

In step 804, after receiving the updated first layer, the user vehicle may make the received updated first layer effective, and make a locally stored original first layer ineffective, to obtain an updated map. In this way, because the first passing mode corresponding to the target passing area at the updated first layer is ineffective, and the second passing mode corresponding to the target passing area is effective, the updated first layer indicates the user vehicle in the target passing area to pass in the second passing mode corresponding to the target passing area. Therefore, when an environment changes greatly, an optimal passing mode adapted to a current environment is automatically planned for the user vehicle, to improve flexibility of autonomous driving of the user vehicle. In addition, the updated first layer further indicates a user vehicle that is located outside the target passing area to continue passing in the first passing mode corresponding to a passing area in which the user vehicle is located, so as to maintain high efficiency of autonomous driving of the user vehicle when an environment changes slightly.

It should be noted that step 802 to step 804 are only an optional implementation. In another optional implementation, after determining that the environment information meets the second passing mode, the server may send second passing mode effectiveness indication information (that is, first indication information) to the user vehicle, to indicate the user vehicle to make the first passing mode corresponding to the target passing area at the first layer ineffective, and make the second passing mode corresponding to the target passing area at the first layer effective. In this way, the user vehicle performs an effectiveness and ineffectiveness operation, so that the server does not need to deliver the full first layer, to help reduce communication overheads.

In an optional implementation, after obtaining the updated first layer, the user vehicle may further perform the following step 805.

Step 805: The user vehicle restores the first layer after a period of time.

In step 805, the restoration operation may be automatically performed by the server when determining that a preset restoration condition is currently met, or may be performed by the server indicating the user vehicle when determining that the preset restoration condition is currently met, or may be automatically performed by the user vehicle when determining that the preset restoration condition is currently met. When the restoration operation is performed by the user vehicle, if the user vehicle receives the updated first layer, the user vehicle may obtain, after a period of time, a restored first layer by making the updated first layer ineffective and making the original first layer effective. If the user vehicle receives the second passing mode effectiveness indication information, the user vehicle may obtain, after a period of time, a restored first layer by making the first passing mode corresponding to the target passing area at the updated first layer effective and making the second passing mode corresponding to the target passing area at the updated first layer ineffective. The following describes several possible restoration manners by using examples.

Restoration manner 1: The server considers by default that the collection device reports the environment information according to a preset reporting periodicity (carried in the environment information), and the collection device reports the environment information only when determining that current environment information triggers a new passing mode that is different from the first passing mode used for the target passing area at the first layer. In this condition, if the server receives, at a moment, the environment information reported by the collection device, but does not receive new environment information reported by the collection device after the preset reporting periodicity carried in the environment information or duration slightly greater than the preset reporting periodicity expires, it indicates that the current environment information is restored to an application scope of the first passing mode used for the target passing area at the first layer, and the server determines that a restoration condition of the first layer is currently met. Therefore, the server may perform the foregoing restoration operation on a first layer locally stored in the server, and deliver a restored first layer to the user vehicle, or may send restoration indication information to the user vehicle, to indicate the user vehicle to perform the foregoing restoration operation on a first layer locally stored in the user vehicle.

Restoration manner 2: The collection device reports the environment information according to a preset reporting periodicity, and the server generates the environment indication information according to a preset generation periodicity. However, the generation operation is performed only when it is determined that the environment information triggers the second passing mode used for the target passing area at the first layer. In this condition, if the server determines that current environment information reported by the collection device within a preset reporting periodicity does not trigger the second passing mode used for the target passing area at the first layer, or the server does not generate new environment indication information within duration that exceeds the preset generation periodicity, it indicates that the current environment information is restored to an application scope of the first passing mode used for the target passing area at the first layer, and the server determines that a restoration condition of the first layer is currently met. In this case, the server may perform the foregoing restoration operation on a first layer locally stored in the server, and deliver a restored first layer to the user vehicle, or may send restoration indication information to the user vehicle, to indicate the user vehicle to perform the foregoing restoration operation on a first layer locally stored in the user vehicle.

Restoration manner 3: The server generates the environment indication information according to a preset generation periodicity, and updates the first layer according to a preset update periodicity. However, the update operation is performed only when it is determined that the environment indication information triggers the second passing mode used for the target passing area at the first layer. In this condition, after updating the first layer at a moment, if the server still does not update the first layer to obtain a new first layer after a preset update periodicity or duration slightly greater than the preset update periodicity expires, it indicates that current environment information is restored to an application scope of the first passing mode used for the target passing area at the first layer, and the server determines that a restoration condition of the first layer is currently met. In this case, the server may perform the foregoing restoration operation on a first layer locally stored in the server, and deliver a restored first layer to the user vehicle, or may send restoration indication information to the user vehicle, to indicate the user vehicle to perform the foregoing restoration operation on a first layer locally stored in the user vehicle.

Restoration manner 4: The user vehicle considers by default that the server delivers the updated first layer according to a preset delivery periodicity, and the server delivers the updated first layer only when determining that current environment indication information triggers the second passing mode used for the target passing area at the first layer. In this condition, if the user vehicle receives, at a moment, the updated first layer delivered by the server, and still does not receive, after the preset delivery periodicity or duration slightly greater than the preset delivery periodicity expires, new updated first layer delivered by the server, it indicates that current environment information is restored to an application scope of the first passing mode used for the target passing area at the first layer (or may be that the user vehicle leaves the target passing area with an environment change, and travels to a passing area with no environment change), and the user vehicle determines that a restoration condition of the first layer is currently met. In this case, the user vehicle may automatically perform the foregoing restoration operation on a first layer locally stored in the user vehicle, to obtain a restored first layer.

Restoration manner 5: The user vehicle monitors a location of the user vehicle in real time, and when determining that the location of the user vehicle is no longer in the target passing area at the recently received updated first layer, the user vehicle determines that a restoration condition of the first layer is currently met. In this case, the user vehicle may automatically perform the foregoing restoration operation on a first layer locally stored in the user vehicle, to obtain a restored first layer.

Restoration manner 6: The second passing mode further corresponds to preset effective duration. After sending the updated first layer to the user vehicle, the server may further start a timer to perform timing. When the timing exceeds the preset effective duration corresponding to the second passing mode, the server may perform the foregoing restoration operation on a locally stored first layer, and deliver a restored first layer to the user vehicle, or may send restoration indication information to the user vehicle, to indicate the user vehicle to perform the foregoing restoration operation on a first layer locally stored in the user vehicle.

Restoration manner 7: The server may further send effective duration indication information of the second passing mode to the user vehicle. The effective duration indication information indicates the user vehicle to restore the first layer after preset effective duration expires. In this case, after receiving the updated first layer, the user vehicle may start a timer to perform timing. When the timing exceeds the preset effective duration corresponding to the second passing mode, the user vehicle may automatically perform the foregoing restoration operation on a locally stored first layer.

It should be noted that the foregoing restoration operations are actually automatically triggered when a corresponding operation is not performed in a periodicity (for example, the preset reporting periodicity, the preset generation periodicity, the preset delivery periodicity, or the preset update periodicity). The preset restoration condition may be set in a local space of the server or a local space of the user vehicle, or may be set in an update rule of the first layer. This is not specifically limited.

It should be understood that, in the foregoing restoration process, making the first passing mode at the first layer effective again is only an optional implementation. In another optional implementation, the server and the user vehicle may alternatively make only the second passing mode at the first layer ineffective, and which passing mode takes effect needs to be determined based on an actual environment, for example, another passing mode that matches a current environment may take effect, or a default passing mode may take effect.

In Embodiment 3, the first passing mode and the second passing mode are preset at the first layer, so that when an environment changes, the server can directly trigger the second passing mode that is preset in advance but does not take effect at the first layer. In this way, the first layer can automatically switch with an environment change to a new first layer that meets a current environment, and a specific passing mode applicable to the current environment can be indicated for the user vehicle. This manner not only helps the user vehicle complete autonomous driving, but also improves driving safety of the user vehicle.

The following describes applications of the navigation method in Embodiment 3 in three specific scenarios by using examples.

### Scenario 1: Visibility speed limit scenario

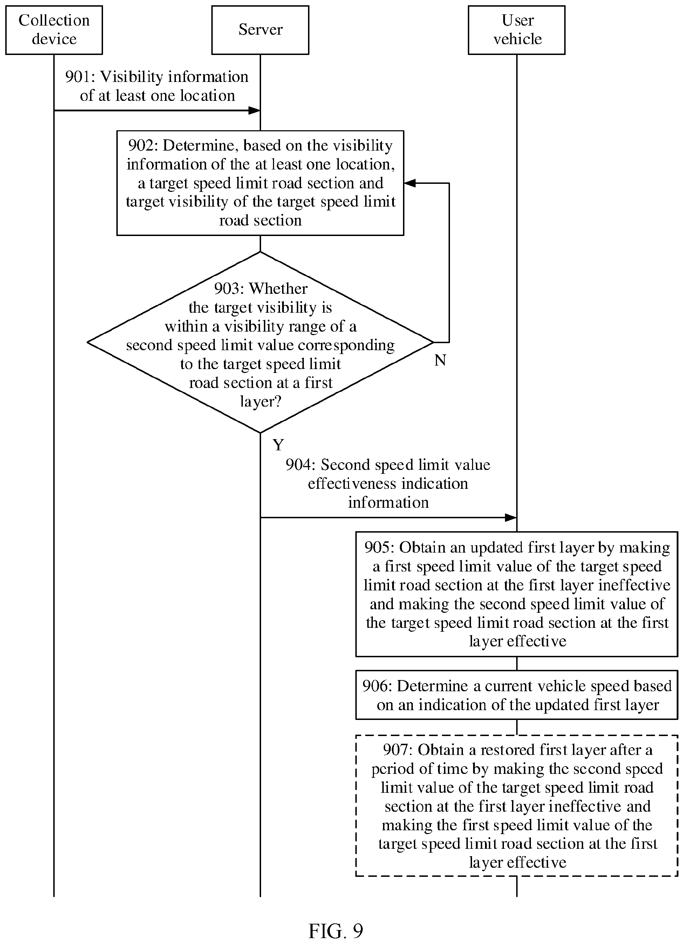

FIG. 9 is an example of a schematic application flowchart of Embodiment 3 in a visibility speed limit scenario. The method is applicable to a collection device, a server, and a user vehicle, for example, one or more collection devices 110, the server 120, and the user vehicle 130 shown in FIG. 1. As shown in FIG. 9, the method includes the following steps.

Step 901: A collection device sends visibility information of at least one location to a server.

Step 902: The server determines, based on the visibility information of the at least one location, a target speed limit road section in a target passing area and target visibility of the target speed limit road section.

In step 902, the target visibility may be any one of a visibility value, a visibility range, or a visibility identifier. For details of related content about how the server determines the target visibility, refer to Embodiment 2. Details are not described herein again.

For example, after determining the target visibility of the target speed limit road section, the server may further generate visibility indication information (belonging to environment indication information in the visibility speed limit scenario) based on location information of the target speed limit road section, the target visibility of the target speed limit road section, and some other information. The some other information may include one or more of a number of the visibility indication information, weather, a preset generation periodicity, and a generation moment. For details of content of the visibility indication information, refer to Embodiment 2. Details are not described herein again.

Step 903: The server determines whether the target visibility of the target speed limit road section is within a visibility range that is met by a second speed limit value corresponding to the target speed limit road section at a first layer, and if the target visibility of the target speed limit road section is within the visibility range, step 904 is performed, or if the target visibility of the target speed limit road section is not within the visibility range, step 902 is performed.

In an optional implementation, the following update rules for a visibility speed limit scenario are set at a first road layer or a first lane layer of a map: a rule identifier, uniquely indicating an update rule; an effect road section, indicating an effect road section of an update rule, and generally represented by a road identifier, a lane identifier, and a road section range; a first speed limit value, indicating a speed limit value that is effective by default when no visibility indication information exists; and at least one second speed limit value and a visibility range in which each of the at least one second speed limit value meets, indicating a speed limit value that is ineffective by default when no visibility indication information exists and that is triggered to be effective based on different visibility ranges when the visibility indication information exists.

Based on the visibility range identifier shown in Table 2 in Embodiment 1, it is assumed that the target visibility of the target speed limit road section is the visibility range identifier 2, and the following rule content (a unit of the speed limit value is km/h) is set for the target speed limit road section at the first layer: a first speed limit value (0, 120], a second speed limit value (0, 60] corresponding to the visibility range identifier 1, a second speed limit value (0, 40] corresponding to the visibility range identifier 2, and a second speed limit value (0, 20] corresponding to the visibility range identifier 3. In this case, the server may directly compare the visibility range identifier 2 corresponding to the target speed limit road section with the three visibility range identifiers met by the three second speed limit values corresponding to the target speed limit road section in the update rule, and find that the visibility range identifier 2 corresponding to the target speed limit road section is the same as the visibility range identifier 2 met by the second speed limit value (0, 40] corresponding to the target speed limit road section. Therefore, the server may determine that the target visibility corresponding to the target speed limit road section triggers the second speed limit value (0, 40] corresponding to the target speed limit road section.

Step 904: The server sends second speed limit value effectiveness indication information to a user vehicle.

Step 905: The user vehicle obtains an updated first layer based on the second speed limit value effectiveness indication information by making the first speed limit value of the target speed limit road section at the first layer ineffective and making the second speed limit value of the target speed limit road section at the first layer effective.

Step 906: The user vehicle determines a current vehicle speed based on an indication of the updated first layer.

In step 904 to step 906, when the server performs analysis on each target passing area, the server may further send updated second speed limit value effectiveness indication information corresponding to each target passing area to a user vehicle that is traveling in the target passing area at a current moment. After the user vehicle updates the first layer, a target speed limit value corresponding to the target speed limit road section is effective, and a first speed limit value corresponding to another speed limit road section other than the target speed limit road section is effective. Therefore, if the user vehicle is currently in the target speed limit road section, the user vehicle may directly refer to the target speed limit value indicated at the updated first layer, to select a low vehicle speed for passing in bad weather, thereby improving driving safety. If the user vehicle is currently located outside the target speed limit road section, the user vehicle may directly refer to the first speed limit value indicated at the updated first layer, to select a high vehicle speed for passing in good weather, thereby improving driving efficiency.

For example, after obtaining the updated first layer, the user vehicle may further perform the following step 907.

Step 907: The user vehicle obtains a restored first layer after a period of time by making the second speed limit value of the target speed limit road section at the first layer ineffective and making the first speed limit value of the target speed limit road section at the first layer effective.

In the foregoing visibility speed limit scenario, the second speed limit value different from the first speed limit value and a corresponding visibility triggering condition are preset at the first layer, so that the server can directly trigger update of a speed limit value at the first layer based on visibility in a current environment. In this way, the user vehicle can directly determine the current vehicle speed based on the indication of the updated first layer, and the vehicle speed meets a current visibility condition. In addition, a restoration mechanism of the first speed limit value is set, so that a normal speed limit of a road section can be restored in time after visibility is restored to normal.

### Scenario 2: Sign speed limit scenario

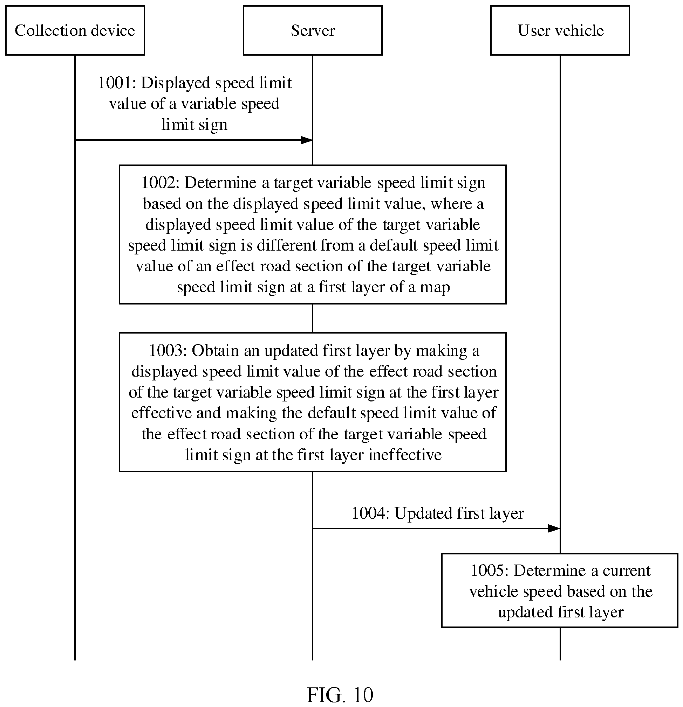

FIG. 10 is an example of a schematic application flowchart of Embodiment 3 in a sign speed limit scenario. The method is applicable to a collection device, a server, and a user vehicle, for example, one or more collection devices 110, the server 120, and the user vehicle 130 shown in FIG. 1. As shown in FIG. 10, the method includes the following steps.

Step 1001: A collection device sends a displayed speed limit value of a variable speed limit sign to a server.

Step 1002: The server determines a target variable speed limit sign in a target passing area based on a displayed speed limit value of each variable speed limit sign, where a displayed speed limit value of the target variable speed limit sign is different from a default speed limit value of an effect road section of the target variable speed limit sign at the first layer of the map.

In step 1002, after determining the target variable speed limit sign, the server may further generate sign indication information (belonging to environment indication information in the sign speed limit scenario) based on the displayed speed limit value of the target variable speed limit sign, location information of the target variable speed limit sign, and some other information. The some other information may include one or more of a number of target variable speed limit sign indication information, a sign change reason, a preset generation periodicity, and a generation moment. For details of content of sign change indication information, refer to Embodiment 2. Details are not described herein again.

Step 1003: The server obtains an updated first layer by making a displayed speed limit value of the effect road section of the target variable speed limit sign at the first layer effective and making the default speed limit value of the effect road section of the target variable speed limit sign at the first layer ineffective.

In an optional implementation, the following update rules are set at the first layer for the sign speed limit scenario: a rule identifier, uniquely indicating an update rule; an effect sign, indicating a sign to which the update rule is applicable, where each sign is associated with an effect road section corresponding to the sign at the first layer; a default speed limit value, indicating a speed limit value that is effective by default when no sign indication information exists, where the speed limit value is usually indicated by a fixed sign disposed on an effect road section; and a target speed limit variable, indicating a speed limit value that is not assigned when no sign indication information exists and that triggers value assignment when sign indication information exists, where the target speed limit variable switches from an ineffective state to an effective state after being assigned a value. According to the update rules, it is assumed that the server determines, at a current moment, that a displayed speed limit value of a target variable speed limit sign is not greater than 60 km/h. In this case, the server may directly assign the displayed speed limit value to a target speed limit variable corresponding to an effect road section of the target variable speed limit sign at the first layer. In this way, after being assigned a value, the target speed limit variable on the effect road section is effective, and the default speed limit value on the effect road section is ineffective. The server obtains the updated first layer.

Step 1004: The server sends the updated first layer to a user vehicle.

Step 1005: The user vehicle determines a current vehicle speed based on the updated first layer.

In step 1003 to step 1005, the user vehicle may determine the current vehicle speed with the server in any one of the following manners:

In a determining manner 1, when no value is assigned to the target speed limit variable, the server displays, at the first layer, the default speed limit value instead of the target speed limit variable to which no value is assigned, and when a value is assigned to the target speed limit variable, displays the assigned target speed limit variable instead of the default speed limit value at the first layer. In this way, the user vehicle may directly pass according to a speed limit value displayed at the updated first layer. For example, when the user vehicle is located on the effect road section of the target variable speed limit sign, the user vehicle determines the current vehicle speed with reference to the target speed limit variable that is of the effect road section and that is displayed at the first layer. When the user vehicle is located outside the effect road section of the target variable speed limit sign, the user vehicle determines the current vehicle speed with reference to the default speed limit value displayed at the first layer.

In a determining manner 2, a target speed limit variable of a sign at the first layer has a higher priority than a default speed limit value of an effect road section of the sign. When the user vehicle uses the updated first layer, the user vehicle sequentially obtains, from the first layer in descending order of priorities, speed limit values of effect road sections of the variable speed limit sign until obtaining the speed limit value. If the variable speed limit sign is a non-target variable speed limit sign, because no value is assigned to a high-priority target speed limit variable, a first speed limit value obtained by the user vehicle is the default speed limit value. If the sign is the target variable speed limit sign, because a high-priority target speed limit variable is assigned a value, a first speed limit value obtained by the user vehicle is the target speed limit variable after being assigned a value.

It should be noted that, in another optional implementation, the target speed limit variable instead of the default speed limit value may alternatively be set at the first layer. In this case, the server further deletes a current assigned value (the default speed limit value, or a last changed displayed speed limit value) of the target speed limit variable to make the current assigned value ineffective, and reassigns a current displayed speed limit value to the target speed limit variable to make a target speed limit value effective, to obtain the updated first layer.

In the foregoing sign speed limit scenario, a target speed limit variable that is not assigned a value is preset for the variable speed limit sign at the first layer, so that after receiving the displayed speed limit value corresponding to the variable speed limit sign, the server can directly assign a value to the target speed limit variable corresponding to the variable speed limit sign. Therefore, the user vehicle can select, with reference to the target speed limit variable that is of the variable speed limit sign and that is assigned a value at the first layer, a current vehicle speed that does not exceed a changed displayed speed limit value of the variable speed limit sign, to reduce a traffic violation possibility.

### Scenario 3: Traffic incident scenario

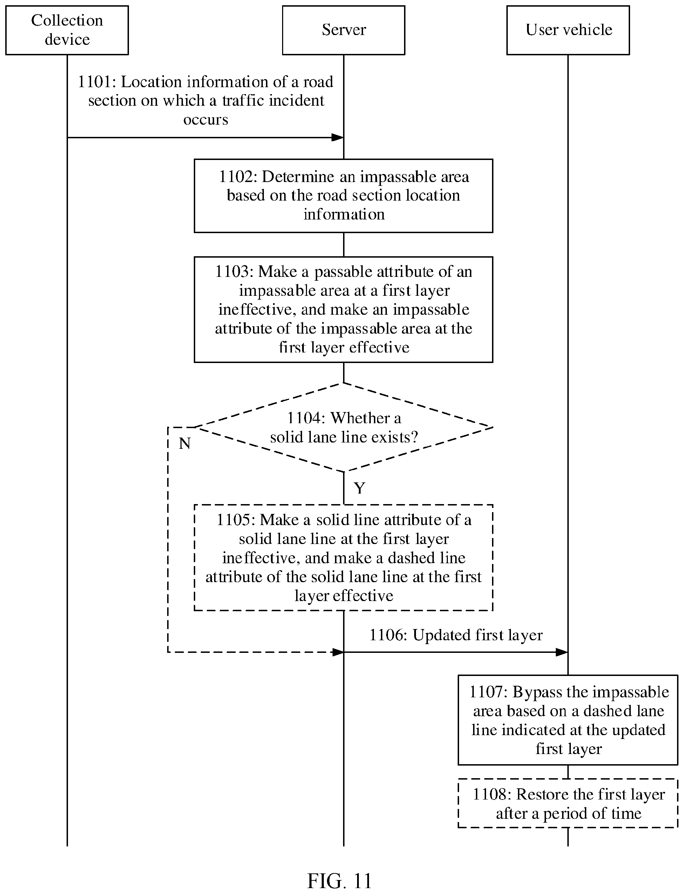

FIG. 11 is an example of a schematic application flowchart of Embodiment 3 in a traffic incident scenario. The method is applicable to a collection device, a server, and a user vehicle, for example, one or more collection devices 110, the server 120, and the user vehicle 130 shown in FIG. 1. As shown in FIG. 11, the method includes the following steps.

Step 1101: A collection device sends, to a server, location information of a road section on which a traffic incident occurs.

Step 1102: The server determines an impassable area in a target passing area based on the location information of the road section on which the traffic incident occurs.

In step 1102, after determining the impassable area, the server may further generate impassable area indication information (belonging to environment indication information in the traffic incident scenario) based on location information of the impassable area and some other information. The some other information may include one or more of a number of the impassable area indication information, a traffic incident identifier, a preset generation periodicity, a generation moment, a set of lanes affected by the impassable area, and a set of lane lines affected by the impassable area. For details of content of the impassable area indication information, refer to the following embodiment. Details are not described herein again.

Step 1103: The server makes a passable attribute of the impassable area at a first layer ineffective, makes an impassable attribute of the impassable area at the first layer effective, and then performs step 1106.

In an optional implementation, the following update rules are set at the first layer (for example, a road layer or a lane layer) of a map for the traffic incident scenario: a rule identifier, uniquely indicating an update rule; an effect road section, indicating a road section range to which the update rule is applicable; the passable attribute, indicating an attribute that is effective by default when no impassable area indication information exists, indicating that a vehicle is allowed to pass, and usually represented at the first layer in a manner in which a line is connected or a line is green; and the impassable attribute, indicating an attribute that is ineffective by default when no impassable area indication information exists and that is triggered to be effective when the impassable area indication information exists, indicating that a vehicle is not allowed to pass, and usually represented at the first layer in a manner in which a line is disconnected or a line is red.

According to the foregoing update rules, after generating the impassable area indication information, the server may first associate the first layer with the impassable area indicated by the impassable area indication information, to determine the effect road section of the impassable area indication information, and then find, from the first layer, the update rule corresponding to the effect road section of the impassable area indication information. Because the impassable area indication information triggers the impassable attribute in the update rule, the server makes, according to the update rule, the impassable attribute of the effect road section of the impassable area indication information at the first layer effective, and makes the passable attribute of the effect road section of the impassable area indication information at the first layer ineffective, and another road section at the first layer is not changed. In this way, at a changed first layer, the user vehicle is not allowed to pass through the effect road section of the impassable area, and the user vehicle is allowed to pass through another road section outside the impassable area.

In the foregoing implementation, the passable attribute and the impassable attribute are set for a same road section at the first layer, so that the impassable attribute of the impassable area at the first layer can be updated, to directly restrict passing of the user vehicle using the first layer in the impassable area. It should be understood that, in another implementation, the road section at the first layer may alternatively have only the passable attribute. In this case, the server may further deliver related information (impassable area layer or impassable area indication information) of the impassable area to the user vehicle, to notify the user vehicle to preferably complete passing with reference to the related information of the impassable area.

In an optional implementation, after determining the impassable area, if determining that a current traffic incident is very urgent, the server may further perform the following step 1104 and step 1105.

Step 1104: The server determines whether a solid lane line exists in all lane lines affected by the impassable area.

If a solid lane line exists in all lane lines, step 1105 is performed.

If no solid lane line exists in all lane lines, step 1106 is performed.

Step 1105: The server makes a solid line attribute of the solid lane line affected by the impassable area at the first layer ineffective, and makes a dashed line attribute of the solid lane line affected by the impassable area at the first layer effective.

For example, when the server determines that a solid lane line exists in all lane lines affected by the impassable area, the server may further generate a set of lane lines with a to-be-updated attribute based on the affected solid lane line. The set of lane lines with a to-be-updated attribute includes an identifier of each affected solid lane line, for example, a number of each solid lane line. The set of lane lines with a to-be-updated attribute may exist independently as another type of environment indication information in the traffic incident scenario, or may be directly included in the impassable area indication information. This is not specifically limited.

In an optional implementation, the following update rules are set at the first layer (for example, a lane line layer) of the map for the traffic incident scenario: a rule identifier, uniquely indicating an update rule; an effect lane line, indicating a lane line range to which the update rule is applicable, usually including a road section range and a lane line number, and indicating one or more lane lines on a road section; the solid line attribute, also referred to as a crossable attribute, indicating an attribute that is effective by default when the set of lane lines with a to-be-updated attribute does not exist, and indicating that a vehicle is allowed to cross, where the crossable attribute is usually represented as a solid line at the first layer; and the dashed line attribute, also referred to as an uncrossable attribute, indicating an attribute that is ineffective by default when the set of lane lines with a to-be-updated attribute does not exist and that is triggered to be effective when the set of lane lines with a to-be-updated attribute exists, and indicating that a vehicle is not allowed to cross, where the uncrossable attribute is usually represented as a dashed line at the first layer.

In an implementation, after generating the set of lane lines with a to-be-updated attribute, the server may first associate the first layer with each solid lane line included in the set of lane lines with a to-be-updated attribute, to determine a road section range and a lane line number of each solid lane line of the to-be-updated attribute, and then find, from the first layer, the foregoing update rule applicable to the road section range and the lane line number. Because the set of lane lines with a to-be-updated attribute triggers the dashed line attribute in the update rule, the server makes, according to the update rule, the dashed line attribute of each solid lane line with the to-be-updated attribute at the first layer effective, and makes the solid line attribute of each solid lane line with the to-be-updated attribute at the first layer ineffective, and other lane lines at the first layer are not changed. In this way, at the changed first layer, each solid lane line with the to-be-updated attribute is displayed as a dashed line, indicating that the user vehicle is allowed to cross, and other lane lines other than each solid lane line with the to-be-updated attribute are still displayed as an original solid line or dashed line.

In the foregoing implementation, the solid line attribute and the dashed line attribute are set for a same lane line at the first layer, so that the same lane line can be either crossable or uncrossable. In this way, the server can switch the solid line attribute and the dashed line attribute of the lane line at the first layer, to directly indicate a crossable or uncrossable operation of the user vehicle. It should be understood that, in another implementation, the lane line at the first layer may have only the solid line attribute or only the dashed line attribute. In this case, the server may further deliver the set of lane lines with a to-be-updated attribute to the user vehicle, to notify the user vehicle to preferably complete passing with reference to the set of lane lines with a to-be-changed attribute.

Step 1106: The server sends an updated first layer to the user vehicle.

Step 1107: The user vehicle bypasses the impassable area based on a dashed lane line indicated at the updated first layer.

In step 1106 and step 1107, the user vehicle may make the received updated first layer effective, and make a locally stored original first layer ineffective. When reaching the impassable area, the user vehicle may plan, based on the updated first layer, a route that bypasses the impassable area. Because the server changes all solid lane lines affected by the impassable area at the first layer to dashed lane lines, the route may include a lane line that is displayed as a solid line on a real road but is displayed as a dashed line at the updated first layer. The user vehicle can perform an emergency lane change on the lane line without being stuck by an uncrossable indication on the real road, to achieve the effect of urgently bypassing the impassable area that may cause a traffic incident.

For example, after receiving the updated first layer, the user vehicle may further perform the following step 1108.

Step 1108: The user vehicle restores the first layer after a period of time.

In step 1108, the user vehicle may restore the first layer in the following manner: making the received updated first layer ineffective, and making the locally stored original first layer effective; or may restore the first layer in the following manner: making the passable attribute of the impassable area at the first layer effective, making the impassable attribute of the impassable area at the first layer ineffective, making the solid line attribute of the solid lane line affected by the impassable area at the first layer effective, and making the dashed line attribute of the solid lane line affected by the impassable area at the first layer ineffective. This is not specifically limited.

In the foregoing traffic incident scenario, a plurality of attributes of whether an area is passable and whether a lane line is crossable are preset at the first layer, so that the first layer can be directly switched to a new first layer including an impassable area and a crossable lane line in the traffic incident scenario, to guide the user vehicle to urgently bypass the impassable area, and improve driving safety of the user vehicle.

It should be noted that, in the foregoing traffic incident scenario, a specific implementation of the navigation method is described only by using an example in which a line type represents an attribute of whether the lane line is crossable. In other cases, the attribute of whether the lane line is crossable may also be represented by a color, for example, a red lane line is uncrossable, and a green lane line is crossable. For a navigation method in other cases, directly refer to the foregoing traffic incident scenario. This is not listed one by one in this application.

It should be noted that, a main idea of Embodiment 3 is: setting an effective first passing mode and an ineffective second passing mode at the first layer in advance, and when the environment information meets an effectiveness condition of the ineffective second passing mode, making the second passing mode at the first layer effective and making the first passing mode at the first layer ineffective, to obtain the updated first layer that meets the current environment, and guide passing of the user vehicle. On the basis of the main idea, a specific implementation of Embodiment 3 may be further modified to obtain a new embodiment. The following describes several possible modification solutions as examples.

In a modification solution 1 of Embodiment 3, the server receives the environment information reported by the collection device, generates, based on the environment information, the environment indication information corresponding to the target passing area, and delivers the environment indication information to the user vehicle. When determining that the environment indication information corresponding to the target passing area meets the effectiveness condition of the second passing mode corresponding to the target passing area at the first layer, the user vehicle obtains the updated first layer by making the first passing mode that is locally stored at the first layer and that is used for the target passing area ineffective and making the second passing mode that is locally stored at the first layer and that is used for the target passing area effective, and passes based on the updated first layer. In this modification solution, the user vehicle performs an update operation on the first layer, which can effectively reduce working pressure of the server. In addition, in this modification solution, because the server delivers the environment indication information but does not deliver the first layer, a data volume of the environment indication information is greatly reduced compared with that of the entire first layer or the first layer corresponding to the target passing area. Therefore, communication overheads can be further effectively reduced.

According to the operation of the modification solution 1 in Embodiment 3, the environment indication information delivered by the server may further include the preset delivery periodicity and the delivery moment that are corresponding to the environment indication information. In this way, after the user vehicle receives the environment indication information, if the user vehicle does not receive new environment indication information from the delivery moment carried in the environment indication information until duration of the preset delivery periodicity expires, it indicates that the current environment is restored. The user vehicle can automatically restore the locally stored first layer.

In a modification solution 2 of Embodiment 3, when the server cannot directly communicate with the user vehicle, the server may further deliver the updated first layer (or the environment indication information) to the collection device, for example, the road side unit. After establishing a connection to any user vehicle passing on a current road, the road side unit transfers the updated first layer to the user vehicle, so that the user vehicle passes based on the updated first layer. This modification solution is not only applicable to a scenario in which the server cannot directly communicate with the user vehicle, but also can implement information forwarding by using an inherent device (namely, the collection device) in a system, and no additional transfer device needs to be disposed. This effectively reduces construction costs.

In a modification solution 3 of Embodiment 3, when a computing capability of the user vehicle is sufficient, the collection device may alternatively directly report the environment information to the user vehicle that is located on the same road section as the collection device. The user vehicle performs an operation on a server side in Embodiment 3 based on the environment information, to obtain the updated first layer, and passes based on the updated first layer.

In a special case of the modification solution 3 of Embodiment 3, the collection device may include only the user vehicle. In this case, the user vehicle can directly plan a passing mode of the user vehicle in real time based on the environment information collected by the user vehicle in real time, without consuming additional resources to exchange information with another device, and can switch to a passing mode that conforms to a current road environment in time. This helps improve an intelligent level of autonomous driving.

In a modification solution 4 of Embodiment 3, a central collection device, for example, a central road side unit, is disposed on each road section, and the central collection device is separately coupled to all collection devices disposed on the road section and all user vehicles traveling on the road section. In an implementation, all collection devices disposed on the road section report environment information to the central collection device on the road section. The central collection device generates, based on the environment information, the environment indication information corresponding to the target passing area, when determining that the environment indication information corresponding to the target passing area meets the effectiveness condition of the second passing mode corresponding to the target passing area at the first layer, obtains the updated first layer by making the first passing mode corresponding to the target passing area at the first layer ineffective and making the triggered second passing mode in the target passing area at the first layer effective, and delivers the updated first layer to all user vehicles traveling on the road section, so that the user vehicles pass based on the updated first layer.

There are many modification solutions of Embodiment 3, which are not described one by one in this application.

It should be understood that Embodiment 1 to Embodiment 3 of this application may be further combined to obtain a new embodiment. For example, in a new embodiment of the traffic incident scenario, after determining the impassable area, the server may first generate the impassable area layer in the manner in Embodiment 2, generate the set of lane lines with a to-be-updated attribute in the manner in Embodiment 3, and then delivers the impassable area layer and the set of lane lines with a to-be-updated attribute to the user vehicle. The user vehicle may first update the lane line layer of the first layer based on the set of lane lines with a to-be-updated attribute in the manner in Embodiment 3, and then complete passing based on the updated first layer and the impassable area layer in the manner in Embodiment 2. In a new embodiment of the sign speed limit scenario, after determining the target variable speed limit sign and the corresponding displayed speed limit value, the server may further first generate the sign indication information in the manner in Embodiment 3, and then send the sign indication information to the user vehicle. The user vehicle may first generate the sign speed limit layer based on the sign indication information in the manner in Embodiment 2, and then complete passing based on the sign speed limit layer and the first layer. In a new embodiment of the visibility speed limit scenario, after determining the target visibility of the target passing area, the server may first generate the visibility indication information in the manner in Embodiment 3, and then send the visibility indication information to the user vehicle. The user vehicle may first generate the visibility speed limit layer based on the visibility indication information in the manner in Embodiment 2, and then complete passing based on the visibility speed limit layer and the first layer.

It should be noted that, names of the foregoing information are merely examples. With evolution of communication technologies, the name of any foregoing information may be changed. However, regardless of how the names of the information change, provided that meanings of the information are the same as those of the information in this application, the information falls within the protection scope of this application.

The foregoing mainly describes the solutions provided in this application from a perspective of interaction between the network elements. It may be understood that, to implement the foregoing functions, each network element includes a corresponding hardware structure and/or software module for executing each function. A person of ordinary skill in the art should easily be aware that, in combination with the examples described in embodiments disclosed in this specification, units, algorithms and steps in the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

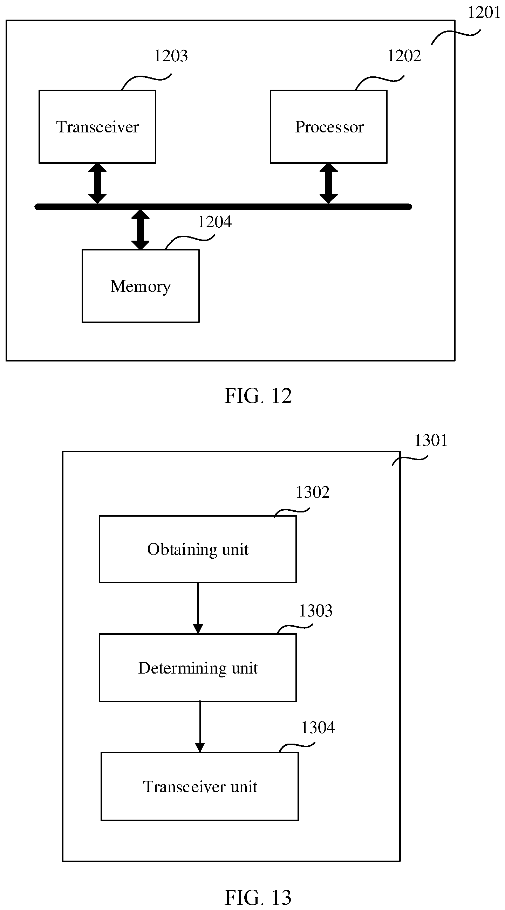

According to the foregoing methods, FIG. 12 is a schematic diagram of a structure of a navigation apparatus according to an embodiment of this application. As shown in FIG. 12, the navigation apparatus 1201 may be a first device or a second device, or may be a chip or a circuit, for example, a chip or a circuit that can be disposed in the first device, or a chip or a circuit that can be disposed in the second device. The first device may be a device having a processing capability, for example, may be the server described in any one of FIG. 3 to FIG. 11. The second device may be a device having a map navigation function, for example, may be the user vehicle described in any one of FIG. 3 to FIG. 11.

Further, the navigation apparatus 1201 may include a bus system. A processor 1202, a memory 1204, and a transceiver 1203 may be connected by using the bus system.

It should be understood that the processor 1202 may be a chip. For example, the processor 1202 may be a field programmable gate array (field programmable gate array, FPGA), an application-specific integrated circuit (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip.

During implementation, the steps in the foregoing methods may be completed by using an integrated logic circuit of hardware in the processor 1202 or instructions in a form of software. The steps of the method disclosed with reference to embodiments of this application may be directly performed by a hardware processor, or may be performed by using a combination of hardware in the processor 1202 and a software module. A software module may be located in a mature storage medium in the art, for example, a random access memory, a flash memory, a read-only memory, a programmable read-only memory, an electrically erasable programmable memory, or a register. The storage medium is located in the memory 1204, and the processor 1202 reads information in the memory 1204, and completes the steps of the foregoing methods in combination with hardware of the processor 1202.

It should be noted that, the processor 1202 in embodiments of this application may be an integrated circuit chip, and has a signal processing capability. During implementation, the steps in the foregoing method embodiments may be completed by using an integrated logic circuit of hardware in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by using a hardware decoding processor, or may be executed and completed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory 1204 in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

When the navigation apparatus 1201 corresponds to the first device, the navigation apparatus may include the processor 1202, the transceiver 1203, and the memory 1204. The memory 1204 is configured to store instructions. The processor 1202 is configured to execute the instructions stored in the memory 1204, to implement a server-related solution in any one or more corresponding methods shown in FIG. 3 to FIG. 11.

When the navigation apparatus 1201 is the first device, the navigation apparatus 1201 may be configured to perform the method performed by the server in any one of Embodiment 1 to Embodiment 3.

When the navigation apparatus 1201 is the first device and executes Embodiment 1,
the transceiver 1203 may receive environment information sent by a collection device, and the processor 1202 may determine, based on the environment information, a second passing mode used for a target passing area, where the second passing mode is different from a first passing mode that is currently effective in a map and that is used for the target passing area; and the transceiver 1203 may further send a second passing mode notification message to the second device, so that the second device makes, based on the second passing mode notification message, the second passing mode used for the target passing area in the map effective, and makes the first passing mode used for the target passing area in the map ineffective.

In an optional implementation, when determining that the environment information meets an effectiveness condition of the second passing mode, the processor 1202 determines the second passing mode used for the target passing area, and the transceiver 1203 may send first indication information to the second device. The first indication information indicates to make the first passing mode ineffective and make the second passing mode effective.

In an optional implementation, the first passing mode and the second passing mode may be information at a first layer of the map.

In an optional implementation, the processor 1202 may generate the second passing mode based on the environment information; and the transceiver 1203 may send the second passing mode to the second device.

In an optional implementation, the first passing mode may be information at the first layer of the map, and the second passing mode may be information at a second layer of the map.

In an optional implementation, after the transceiver 1203 sends the second passing mode notification message to the second device, the processor 1202 may further send ineffectiveness indication information to the second device when determining that a first ineffectiveness condition is met. The ineffectiveness indication information indicates the second device to stop passing in the target passing area in the second passing mode, or indicates the second device to pass in the target passing area in the first passing mode, or indicates the second device to pass in the target passing area in a default passing mode.

In an optional implementation, the first ineffectiveness condition may include the following content: No new environment information is received within first preset duration; newly received environment information no longer meets the effectiveness condition of the second passing mode; a passing mode determined based on newly received environment information is different from the second passing mode; or effectiveness duration of the second passing mode exceeds preset effective duration.

In an optional implementation, the transceiver 1203 may further send effective duration indication information of the second passing mode to the second device. The effective duration indication information indicates the second device to stop passing in the target passing area in the second passing mode after preset effective duration expires.

In an optional implementation, the environment information may include visibility information of at least one location. The processor 1202 may determine, based on the visibility information, a target speed limit road section in the target passing area and a target speed limit of the target speed limit road section.

In an optional implementation, the processor 1202 may first determine, based on the visibility information, target visibility corresponding to the target speed limit road section in the target passing area, then query a preset correspondence between a visibility range and a speed limit, and determine that a queried speed limit corresponding to a visibility range in which the target visibility is located is the target speed limit corresponding to the target speed limit road section.

In an optional implementation, the first layer may store an effective first speed limit, an ineffective second speed limit, and a visibility range that triggers the second speed limit to take effect. The processor 1202 may first determine, based on the visibility information, target visibility corresponding to the target speed limit road section in the target passing area, then determine whether the target visibility is within the visibility range that triggers the second speed limit to take effect, and if the target visibility is within the visibility range that triggers the second speed limit to take effect, determine the second speed limit as the target speed limit corresponding to the target speed limit road section.

In an optional implementation, the environment information may include a displayed speed limit of at least one sign. The processor 1202 may determine, based on the displayed speed limit, a target sign whose speed limit of an effect area changes and whose at least a part of road sections of the effect area is located in the target passing area; and determine to pass through the at least part of road sections in the target passing area at a speed not exceeding a changed speed limit of the target sign.

In an optional implementation, the environment information may include location information of a road section on which a traffic incident occurs. The processor 1202 may determine an impassable area in the target passing area based on the road section location information; and determine that the second passing mode includes prohibiting passing in the impassable area.

In an optional implementation, after the processor 1202 determines the impassable area in the target passing area based on the road section location information, the processor 1202 may further determine all lane lines affected by the impassable area, and associate all the lane lines with the first layer of the map, to determine a solid lane line in all the lane lines, and determine that the second passing mode further includes crossing the solid lane line.

For concepts, explanations, detailed descriptions, and other steps of the navigation apparatus 1201 that are related to the technical solutions of the first device provided in embodiments of this application, refer to the descriptions of the content in the foregoing methods or other embodiments. Details are not described herein again.

When the navigation apparatus 1201 corresponds to the second device, the navigation apparatus may include the processor 1202, the transceiver 1203, and the memory 1204. The memory 1204 is configured to store instructions. The processor 1202 is configured to execute the instructions stored in the memory 1204, to implement a user vehicle-related solution in any one or more corresponding methods shown in FIG. 3 to FIG. 11.

When the navigation apparatus 1201 is the second device, the navigation apparatus 1201 may be configured to perform the method performed by the user vehicle in any one of Embodiment 1 to Embodiment 3.

When the navigation apparatus 1201 is the second device and executes Embodiment 1,

The transceiver 1203 may receive a second passing mode notification message from the first device. The processor 1202 may make, based on the second passing mode notification message, a second passing mode used for a target passing area in a map effective, and make a first passing mode used for the target passing area in the map ineffective.

In an optional implementation, the second passing mode notification message may include first indication information, and the first indication information indicates to make the first passing mode ineffective and make the second passing mode effective.

In an optional implementation, the first passing mode and the second passing mode may be information at a first layer of the map.

In an optional implementation, the second passing mode notification message may include content of the second passing mode.

In an optional implementation, the first passing mode may be information at the first layer of the map, the second passing mode may be information at a second layer of the map, and the second passing mode notification message includes the second layer.

In an optional implementation, after the processor 1202 makes, based on the second passing mode notification message, the second passing mode used for the target passing area in the map effective, and makes the first passing mode used for the target passing area in the map ineffective, and when determining that a second ineffectiveness condition is met, the processor 1202 may further stop passing in the target passing area in the second passing mode; or pass in the target passing area in the first passing mode; or pass in the target passing area in a default passing mode.

In an optional implementation, the second ineffectiveness condition may include any one of the following content: Ineffectiveness indication information sent by the first device is received, where the ineffectiveness indication information indicates the second device to stop passing in the target passing area in the second passing mode; leaving the target passing area; a new second passing mode notification message is not obtained within second preset duration; or time for passing in the second passing mode exceeds preset effective duration.

In an optional implementation, the first passing mode may include passing in the target passing area at a vehicle speed not exceeding a first speed limit, and the second passing mode includes passing in the target passing area at a vehicle speed not exceeding a second speed limit.

In an optional implementation, the second speed limit may be a lowest speed limit in a visibility speed limit determined based on visibility information and a sign speed limit determined based on a displayed speed limit of a sign.

In an optional implementation, the second passing mode may include an impassable area in the target passing area and a route for bypassing the impassable area.

In an optional implementation, the route for bypassing the impassable area may include a target lane line indicated as crossable, and the target lane line is indicated as uncrossable at the first layer.

For concepts, explanations, detailed descriptions, and other steps of the navigation apparatus 1201 that are related to the technical solutions of the second device provided in embodiments of this application, refer to the descriptions of the content in the foregoing methods or other embodiments. Details are not described herein again.

Based on the foregoing embodiments and a same concept, FIG. 13 is a schematic diagram of a navigation apparatus according to an embodiment of this application. As shown in FIG. 13, the navigation apparatus 1301 may be a first device, for example, may be the server described in any one of FIG. 3 to FIG. 11, or may be a chip or a circuit, for example, a chip or a circuit that can be disposed in a server. The navigation apparatus may implement steps performed by the server in any one or more of the corresponding methods shown in the FIG. 3 to FIG. 11. The navigation apparatus may include an obtaining unit 1302, a determining unit 1303, and a transceiver unit 1304.

When the navigation apparatus 1301 is the first device, the obtaining unit 1302 may obtain environment information, the determining unit 1303 may determine, based on the environment information, a second passing mode used for a target passing area, and the transceiver unit 1304 may send second passing mode notification message to the second device. The second passing mode is different from a first passing mode that is currently effective in a map and used for the target passing area.

The transceiver unit 1304 may be a sending unit or a transmitter when sending information, the transceiver unit 1304 may be a receiving unit or a receiver when receiving information, the transceiver unit 1304 may be a transceiver, and the transceiver, the transmitter, or the receiver may be a radio frequency circuit. When the navigation apparatus 1301 includes a storage unit, the storage unit is configured to store computer instructions. The obtaining unit 1302 and the determining unit 1303 are separately communicatively connected to the storage unit. The obtaining unit 1302 and the determining unit 1303 separately execute the computer instructions stored in the storage unit, so that the navigation apparatus 1301 may be configured to perform the method performed by the server in any one of Embodiment 1 to Embodiment 3. The obtaining unit 1302 or the determining unit 1303 may be a general-purpose central processing unit (CPU), a microprocessor, or an application-specific integrated circuit (application specific intergrated circuit, ASIC).

When the navigation apparatus 1301 is the first device, the transceiver unit 1304 may be an input and/or output interface, a pin, a circuit, or the like. The obtaining unit 1302 and the determining unit 1303 may execute computer-executable instructions stored in the storage unit, so that a chip in the navigation apparatus 1301 performs the method performed in any one of Embodiment 1 to Embodiment 3. Optionally, the storage unit is a storage unit in the chip, for example, a register or a cache, or the storage unit may be a storage unit in the navigation apparatus 1301 but outside the chip, for example, a read-only memory (read only memory, ROM) or another type of static storage device capable of storing static information and instructions, or a random access memory (random access memory, RAM).

For concepts, explanations, detailed descriptions, and other steps of the navigation apparatus 1301 that are related to the technical solutions provided in embodiments of this application, refer to the descriptions of the content in the foregoing methods or other embodiments. Details are not described herein again.

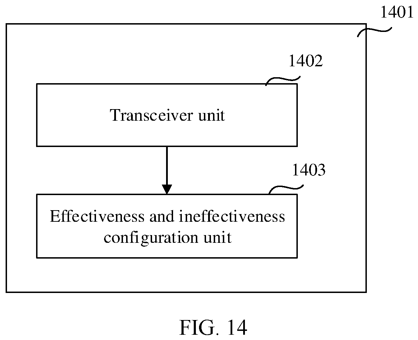

Based on the foregoing embodiments and a same concept, FIG. 14 is a schematic diagram of a navigation apparatus according to an embodiment of this application. As shown in FIG. 14, the navigation apparatus 1401 may be a second device, and for example, may be the user vehicle described in any one of FIG. 3 to FIG. 11, or may be a chip or a circuit, for example, a chip or a circuit that can be disposed in a user vehicle. The navigation apparatus 1401 may implement steps performed by the user vehicle in any one or more of the corresponding methods shown in the FIG. 3 to FIG. 11. The navigation apparatus 1401 may include a transceiver unit 1402 and an effectiveness and ineffectiveness configuration unit 1403.

When the navigation apparatus 1401 is a second device, the transceiver unit 1402 may receive a second passing mode notification message from a first device. The effectiveness and ineffectiveness configuration unit 1403 may make, based on the second passing mode notification message, a second passing mode used for a target passing area in a map effective, and make a first passing mode used for the target passing area in the map ineffective.

The transceiver unit 1402 may be a sending unit or a transmitter when sending information, the transceiver unit 1402 may be a receiving unit or a receiver when receiving information, the transceiver unit 1402 may be a transceiver, and the transceiver, the transmitter, or the receiver may be a radio frequency circuit. When the navigation apparatus 1401 includes a storage unit, the storage unit is configured to store computer instructions. The effectiveness and ineffectiveness configuration unit 1403 is communicatively connected to the storage unit. The effectiveness and ineffectiveness configuration unit 1403 executes the computer instructions stored in the storage unit, so that the navigation apparatus 1401 may be configured to perform the method performed by the user vehicle in any one of Embodiment 1 to Embodiment 3. The effectiveness and ineffectiveness configuration unit 1403 may be a general-purpose central processing unit (CPU), a microprocessor, or an application-specific integrated circuit (ASIC).

When the navigation apparatus 1401 is a chip, the transceiver unit 1402 may be an input and/or output interface, a pin, a circuit, or the like. The effectiveness and ineffectiveness configuration unit 1403 may execute computer-executable instructions stored in the storage unit, so that a chip in the navigation apparatus 1401 performs the method performed in any one of Embodiment 1 to Embodiment 3. Optionally, the storage unit is a storage unit in the chip, for example, a register or a cache, or the storage unit may be a storage unit in the navigation apparatus 1401 but outside the chip, for example, a read-only memory (ROM) or another type of static storage device capable of storing static information and instructions, or a random access memory (RAM).

For concepts, explanations, detailed descriptions, and other steps of the navigation apparatus 1401 that are related to the technical solutions provided in embodiments of this application, refer to the descriptions of the content in the foregoing methods or other embodiments. Details are not described herein again.

It should be understood that division into units of the navigation apparatuses 1301 and 1401 is merely logical function division. During actual implementation, all or some of the units may be integrated into one physical entity, or may be physically separated. In embodiments of this application, the transceiver unit 1304 and the transceiver unit 1402 may be implemented by the transceiver 1203 in FIG. 12, and the obtaining unit 1302, the determining unit 1303, and the effectiveness and ineffectiveness configuration unit 1403 may be implemented by the processor 1202 in FIG. 12.

According to the methods provided in embodiments of this application, this application further provides a map, including a first passing mode and a second passing mode that are used for a target passing area. When the second passing mode is effective, the first passing mode is ineffective. When the first passing mode is effective, the second passing mode is ineffective.

In an optional implementation, the first passing mode may be a default passing mode used for passing in the target passing area.

In an optional implementation, both the first passing mode and the second passing mode may exist at a first layer of the map.

In an optional implementation, the first passing mode may exist at the first layer of the map, and the second passing mode may exist at a second layer of the map.

According to the method provided in embodiments of this application, this application further provides a computer-readable storage medium. The computer-readable medium stores program code. When the program code is run on a computer, the computer is enabled to perform the method in any one of embodiments shown in FIG. 3 to FIG. 11.

An embodiment of this application further provides a vehicle. The vehicle is configured to perform the method in any one of embodiments shown in FIG. 3 to FIG. 11.

According to the method provided in embodiments of this application, this application further provides a navigation system. The navigation system includes at least two of the foregoing server, one or more collection devices, and a user vehicle.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in the figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, various illustrative logical blocks (illustrative logical block) and steps (step) described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A navigation method, wherein the method comprises:
obtaining, by a first device, environment information;
determining, by the first device based on the environment information, a second passing mode used for a target passing area, wherein the second passing mode is different from a first passing mode that is currently effective in a map and used for the target passing area; and
sending, by the first device, a second passing mode notification message to a second device.

2. The method according to claim 1, wherein
the determining, by the first device based on the environment information, a second passing mode used for a target passing area comprises:
determining, by the first device, that the environment information meets an effectiveness condition of the second passing mode; and
the sending, by the first device, a second passing mode notification message to a second device comprises:
sending, by the first device, first indication information to the second device, wherein
the first indication information indicates to make the first passing mode ineffective and make the second passing mode effective.

3. The method according to claim 1 or 2, wherein the first passing mode and the second passing mode are information at a first layer of the map.

4. The method according to claim 1, wherein
the determining, by the first device based on the environment information, a second passing mode used for a target passing area comprises:
generating, by the first device, the second passing mode based on the environment information; and
the sending, by the first device, a second passing mode notification message to a second device comprises:
sending, by the first device, the second passing mode to the second device.

5. The method according to claim 1 or 4, wherein the first passing mode is information at a first layer of the map, the second passing mode is information at a second layer of the map, and the sending, by the first device, a second passing mode notification message to a second device comprises:
sending, by the first device to the second device, the second layer comprising the second passing mode.

6. The method according to any one of claims 1 to 5, wherein after the sending, by the first device, a second passing mode notification message to a second device, the method further comprises:
sending, by the first device, ineffectiveness indication information to the second device when determining that a first ineffectiveness condition is met, wherein
the ineffectiveness indication information indicates the following content:
stopping, by the second device, passing in the target passing area in the second passing mode;
passing, by the second device, in the target passing area in the first passing mode; or
passing, by the second device, in the target passing area in a default passing mode.

7. The method according to claim 6, wherein the first ineffectiveness condition comprises the following content:
no new environment information is received within first preset duration;
newly received environment information no longer meets the effectiveness condition of the second passing mode;
a passing mode determined based on newly received environment information is different from the second passing mode; or
effectiveness duration of the second passing mode exceeds preset effective duration.

8. The method according to any one of claims 1 to 5, wherein the method further comprises:
sending, by the first device, effective duration indication information of the second passing mode to the second device, wherein
the effective duration indication information indicates the second device to stop passing in the target passing area in the second passing mode after preset effective duration expires.

9. The method according to any one of claims 1 to 5, wherein the environment information comprises visibility information of at least one location; and
the determining, by the first device based on the environment information, a second passing mode used for a target passing area comprises:
determining, by the first device based on the visibility information, a target speed limit road section in the target passing area and a target speed limit of the target speed limit road section.

10. The method according to any one of claims 1 to 5, wherein the environment information comprises a displayed speed limit of at least one sign; and
the determining, by the first device based on the environment information, a second passing mode used for a target passing area comprises:
determining, by the first device based on the displayed speed limit, that a speed limit of an effect area of the sign changes and at least a part of road sections of the effect area is located in the target passing area; and
determining, by the first device, to pass through the at least part of road sections in the target passing area at a speed not exceeding the changed speed limit.

11. The method according to any one of claims 1 to 5, wherein the environment information comprises location information of a road section on which a traffic incident occurs; and
the determining, by the first device based on the environment information, a second passing mode used for a target passing area comprises:
determining, by the first device, an impassable area in the target passing area based on the road section location information; and
determining that the second passing mode comprises prohibiting passing in the impassable area.

12. A navigation method, wherein the method comprises:
receiving, by a second device, a second passing mode notification message from a first device; and
making, by the second device based on the second passing mode notification message, a second passing mode used for a target passing area in a map effective, and making a first passing mode used for the target passing area in the map ineffective.

13. The method according to claim 12, wherein the second passing mode notification message comprises first indication information, and the first indication information indicates to make the first passing mode ineffective and make the second passing mode effective.

14. The method according to claim 12 or 13, wherein the first passing mode and the second passing mode are information at a first layer of the map.

15. The method according to claim 12, wherein the second passing mode notification message comprises content of the second passing mode.

16. The method according to claim 12 or 15, wherein the first passing mode is information at a first layer of the map, the second passing mode is information at a second layer of the map, and the second passing mode notification message comprises the second layer.

17. The method according to any one of claims 12 to 16, wherein after the making a second passing mode used for a target passing area in a map effective, and making a first passing mode used for the target passing area in the map ineffective, the method further comprises:
when determining that a second ineffectiveness condition is met, performing, by the second device, the following content:
stopping, by the second device, passing in the target passing area in the second passing mode;
passing, by the second device, in the target passing area in the first passing mode; or
passing, by the second device, in the target passing area in a default passing mode.

18. The method according to claim 17, wherein the second ineffectiveness condition comprises the following content:
the second device receives ineffectiveness indication information sent by the first device, wherein the ineffectiveness indication information indicates the second device to stop passing in the target passing area in the second passing mode;
the second device leaves the target passing area;
the second device does not obtain a new second passing mode notification message within second preset duration; or
time in which the second device passes in the second passing mode exceeds preset effective duration.

19. The method according to any one of claims 12 to 18, wherein the first passing mode comprises passing in the target passing area at a vehicle speed not exceeding a first speed limit, and the second passing mode comprises passing in the target passing area at a vehicle speed not exceeding a second speed limit.

20. The method according to any one of claims 12 to 19, wherein the second passing mode comprises an impassable area in the target passing area and a route for bypassing the impassable area.

21. A map, comprising:
a first passing mode and a second passing mode that are used for a target passing area, wherein
when the second passing mode is effective, the first passing mode is ineffective; and
when the first passing mode is effective, the second passing mode is ineffective.

22. The map according to claim 21, wherein the first passing mode is a default passing mode used for passing in the target passing area.

23. The map according to claim 21 or 22, wherein both the first passing mode and the second passing mode exist at a first layer of the map.

24. The map according to claim 21 or 22, wherein the first passing mode exists at a first layer of the map, and the second passing mode exists at a second layer of the map.

25. A navigation apparatus, wherein the apparatus comprises:
an obtaining unit, configured to obtain environment information;
a determining unit, configured to determine, based on the environment information, a second passing mode used for a target passing area, wherein the second passing mode is different from a first passing mode that is currently effective in a map and used for the target passing area; and
a transceiver unit, configured to send a second passing mode notification message to a second device.

26. The apparatus according to claim 25, wherein
the determining unit is specifically configured to determine that the environment information meets an effectiveness condition of the second passing mode; and
the transceiver unit is specifically configured to send first indication information to the second device, wherein
the first indication information indicates to make the first passing mode ineffective and make the second passing mode effective.

27. The apparatus according to claim 25 or 26, wherein the first passing mode and the second passing mode are information at a first layer of the map.

28. The apparatus according to claim 25, wherein
the determining unit is specifically configured to generate the second passing mode based on the environment information; and
the transceiver unit is specifically configured to send the second passing mode to the second device.

29. The apparatus according to claim 25 or 28, wherein the first passing mode is information at a first layer of the map, and the second passing mode is information at a second layer of the map; and
the transceiver unit is specifically configured to send, to the second device, the second layer comprising the second passing mode.

30. The apparatus according to any one of claims 25 to 29, wherein after the transceiver unit sends the second passing mode notification message to the second device, the transceiver unit is further configured to:
send ineffectiveness indication information to the second device when it is determined that a first ineffectiveness condition is met, wherein
the ineffectiveness indication information indicates the following content:
stopping, by the second device, passing in the target passing area in the second passing mode;
passing, by the second device, in the target passing area in the first passing mode; or
passing, by the second device, in the target passing area in a default passing mode.

31. The apparatus according to claim 30, wherein the first ineffectiveness condition comprises the following content:
no new environment information is received within first preset duration;
newly received environment information no longer meets the effectiveness condition of the second passing mode;
a passing mode determined based on newly received environment information is different from the second passing mode; or
effectiveness duration of the second passing mode exceeds preset effective duration.

32. The apparatus according to any one of claims 25 to 29, wherein the transceiver unit is further configured to:
send effective duration indication information of the second passing mode to the second device, wherein
the effective duration indication information indicates the second device to stop passing in the target passing area in the second passing mode after preset effective duration expires.

33. The apparatus according to any one of claims 25 to 29, wherein the environment information comprises visibility information of at least one location; and
the determining unit is specifically configured to:
determine, based on the visibility information, a target speed limit road section in the target passing area and a target speed limit of the target speed limit road section.

34. The apparatus according to any one of claims 25 to 29, wherein the environment information comprises a displayed speed limit of at least one sign; and
the determining unit is specifically configured to:
determine, based on the displayed speed limit, that a speed limit of an effect area of the sign changes and at least a part of road sections of the effect area is located in the target passing area; and
determine to pass through the at least part of road sections in the target passing area at a speed not exceeding the changed speed limit.

35. The apparatus according to any one of claims 25 to 29, wherein the environment information comprises location information of a road section on which a traffic incident occurs; and
the determining unit is specifically configured to:
determine an impassable area in the target passing area based on the road section location information, wherein
the second passing mode comprises prohibiting passing in the impassable area.

36. A navigation apparatus, wherein the apparatus comprises:
a transceiver unit, configured to receive a second passing mode notification message from a first device; and
a processing unit, configured to make, based on the second passing mode notification message, a second passing mode used for a target passing area in a map effective, and make a first passing mode used for the target passing area in the map ineffective.

37. The apparatus according to claim 36, wherein the second passing mode notification message comprises first indication information, and the first indication information indicates to make the first passing mode ineffective and make the second passing mode effective.

38. The apparatus according to claim 36 or 37, wherein the first passing mode and the second passing mode are information at a first layer of the map.

39. The apparatus according to claim 36, wherein the second passing mode notification message comprises content of the second passing mode.

40. The apparatus according to claim 36 or 39, wherein the first passing mode is information at a first layer of the map, the second passing mode is information at a second layer of the map, and the second passing mode notification message comprises the second layer.

41. The apparatus according to any one of claims 36 to 40, wherein after the processing unit makes the second passing mode used for the target passing area in the map effective, and makes the first passing mode used for the target passing area in the map ineffective, the processing unit is further configured to:
when determining that a second ineffectiveness condition is met, perform the following content:
stopping passing in the target passing area in the second passing mode;
passing in the target passing area in the first passing mode; or
passing in the target passing area in a default passing mode.

42. The apparatus according to claim 41, wherein the second ineffectiveness condition comprises the following content:
ineffectiveness indication information sent by the first device is received, wherein the ineffectiveness indication information indicates to stop passing in the target passing area in the second passing mode;
leaving the target passing area;
a new second passing mode notification message is not obtained within second preset duration; or
time for passing in the second passing mode exceeds preset effective duration.

43. The apparatus according to any one of claims 36 to 42, wherein the first passing mode comprises passing in the target passing area at a vehicle speed not exceeding a first speed limit, and the second passing mode comprises passing in the target passing area at a vehicle speed not exceeding a second speed limit.

44. The apparatus according to any one of claims 36 to 43, wherein the second passing mode comprises an impassable area in the target passing area and a route for bypassing the impassable area.

45. A navigation apparatus, comprising a processor and a memory, wherein the memory stores computer program instructions, and the processor runs the computer program instructions to implement the method according to any one of claims 1 to 11, or implement the method according to any one of claims 12 to 20.

46. A navigation system, comprising a first device and a second device, wherein the first device is configured to implement the method according to any one of claims 1 to 11, and the second device is configured to implement the method according to any one of claims 12 to 20.

47. A computer-readable storage medium, wherein the computer-readable storage medium stores a computer program, and when the computer program is run, the method according to any one of claims 1 to 11 is implemented, or the method according to any one of claims 12 to 20 is implemented.

48. A computer program product, wherein when running on a processor, the computer program product implements the method according to any one of claims 1 to 11, or implements the method according to any one of claims 12 to 20.
